(19) Europäisches Patentamt
European Patent Office
Office européen des brevets

(11) **EP 2 757 753 B1**

(12) **EUROPEAN PATENT SPECIFICATION**

(45) Date of publication and mention
of the grant of the patent:
**21.08.2019 Bulletin 2019/34**

(51) Int Cl.:
*H04L 27/26* (2006.01)          *H04L 27/36* (2006.01)
*H04L 27/34* (2006.01)          *H04L 27/38* (2006.01)
*H04L 5/00* (2006.01)

(21) Application number: **13152017.3**

(22) Date of filing: **21.01.2013**

(54) **Data transmission and reception using a hierarchical modulation scheme with clustered constellation points**

Datenübertragung unter Verwendung hierarchischer Modulation mit einer Gruppierung von Konstellationspunkten

Transmission de données en utilisant une modulation hierarchique avec groupement des points de constellation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.07.2014 Bulletin 2014/30**

(73) Proprietors:
• **Mitsubishi Electric R&D Centre Europe B.V.**
  **1119 NS Schiphol Rijk (NL)**
  Designated Contracting States:
  **FR**
• **Mitsubishi Electric Corporation**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
• **Ciochina, Cristina**
  **35708 Rennes Cedex 7 (FR)**
• **Brunel, Loïc**
  **35708 Rennes Cedex 7 (FR)**

(74) Representative: **Cabinet Le Guen Maillet**
**3, impasse de la Vigie**
**CS 71840**
**35418 Saint-Malo Cedex (FR)**

(56) References cited:
**US-A- 5 581 578          US-A1- 2008 170 640**
**US-B2- 7 778 335**

## Description

The present invention relates generally to a method and a device for transmitting a stream of data to at least one receiver.

In the business of satellite communications, direct to the home television has one of the most important market shares. The market growth is mainly driven by the introduction of HDTV (High Definition TV) but recently 3DTV (3 dimension) has been introduced. In the future, multi-view 3DTV and UHDTV (Ultra High Definition TV) will follow. In order to accommodate high quality transmission, which requires high native bitrates, large transmission bandwidths are necessary.

Available spectrum lies into frequency regions sensitive to rain fading. One of the existing countermeasures for rain fades is the use of hierarchical modulations, offering different protection levels of the bits selecting a certain constellation point.

In hierarchical modulation, two separate bit streams, a "High Priority" (HP) and a "Low Priority" (LP) streams are combined onto a single modulated stream.

Receivers with good reception conditions can correctly receive both streams, while those with poorer reception conditions may only receive the "High Priority" stream. Broadcasters can target two different types of receiver with two completely different services. Broadcasters can also target two different types of receivers with two different capabilities: one receiver type with low capability which can only decode the HP stream and another receiver type with high capability which can decode both the LP and the HP streams. Typically, the LP stream is of higher bit rate, but lower robustness than the HP one.

The resulting hierarchical constellation can be separated in several clusters of constellation points, where each cluster encodes the essential information of the HP stream and the constellation points in each cluster encode the supplementary information carried by the LP stream. This characteristic imposes certain restrictions for the length of the HP and LP streams.

Let us consider a hierarchical constellation comprising $X = 2^{n'}$ constellation points, and thus mapping groups of $n'$ bits onto a constellation point. Let us assume that the constellation can be separated into $C = 2^{n_1}$ clusters comprising $2^{n_2}$ constellation points each ($n' = n_1 + n_2$). In the mapping process, $n_1$ bits of the HP stream identify one out of the $C$ clusters and $n_2$ bits of the LP stream identify one constellation point out of the $2^{n_2}$ constellation points comprised in the cluster identified by the bits of the HP stream.

At the receiver side, a possibility is to decode both the HP and LP streams. Simultaneous decoding of both streams is possible, especially when the information on the cluster brings about little improvement on the decoding of the LP stream. Other decoder configurations can be used like feedback from the HP decoder to the LP decoder, or iterative decoding.

HP and LP streams are unequally protected to the errors, both due to the possibility of having different coding rates in the FEC (Forward Error Correction) codes and to the nature of the hierarchical mapping. HP and LP streams have different performance and they ensure transmission of different quality at different signal to noise ratios. For example, if in clear sky conditions both the LP stream and the HP stream can be decoded in order to offer high quality TV reception, in rainy conditions only the HP stream can be decoded, offering basic quality TV reception.

Hierarchical modulation is implemented in some DVB standards. These standards mainly use H16QAM (hierarchical 16 Quadrature Amplitude Modulation) and H64QAM.

The patent US5581578 discloses a method to multi-resolution QAM signals, which can be represented by rotationally invariant signal constellations. Each of patent applications US 2008/170640 A1 and US7778335B2 discloses a method of hierarchical modulation in which clusters of constellation points are used for transmitting streams of signals.

The present invention aims at providing a method and a device which enable to transfer data, while maintaining a low Peak-to-Average Power Ratio on transferred signals.

To that end, the present invention concerns a method as defined in independent claim 1 and further detailed in the dependent claims referring back to this claim. Additionally, the present invention concerns a device as defined in independent claim 10 and further detailed in the dependent claims referring back to this claim.

Thus, the present invention enables to receive data, using a hierarchical modulation stream, while maintaining a low Peak-to-Average Power Ratio on transferred signals.

According to a particular feature, the constellation points in each cluster are set on plural rings having the same centre for a same cluster and, for each cluster, said centre is the intersection of the pair of straight lines delimiting the region in which the cluster is comprised.

Thus, in each region, the points of each cluster are organized as points of an amplitude shift keying modulation. Several constellations can be built with several different first distances but the structure of clusters remains similar in the different constellation. It allows the implementation of a receiver with similar structure from one constellation to other, which reduces the receiver complexity when different constellations out of the built constellation must be detected by the same receiver.

According to a particular feature, the constellation points in each cluster are set on plural concentric rings having the same centre for all clusters, said centre being the same as the centre of the one circle.

Thus, the constellation of points has better Peak-to-Average Power Ratio since the points of the constellation are located on concentric circles and their respective powers take a limited number of values.

According to a particular feature, the location of constellation points is obtained by:

- separating the constellation points of an uniform amplitude phase shift keying constellation into clusters of constellation points, each cluster of constellation points containing the same number of constellation points, each cluster of constellation points being comprised in a circle sector, said circle sectors being contiguous, having the same central point and the same central angle of $2\pi/C$ and being separated from neighbour circle sectors by straight lines,
- applying, for each constellation point of each cluster, a translation of a second distance value in the direction of the bisector of the circle sector comprising the cluster while keeping the constellation points contained in respective clusters of constellation points in the respective circle sectors,
- re-scaling the constellation of points on which the translations are applied, the second distance value being after the re-scaling equal to the first distance value.

Thus, a set of constellations of points can be easily obtained from a single uniform amplitude phase shift keying constellation by using different values for the first distance.

According to a particular feature, the method comprises further steps of:

- determining new rings, the ring radii depending on said first distance, said rings being concentric and having the same center as the constellation,
- displacing the points of constellation onto the new rings, each point being displaced onto the closest new ring.

Thus, a constellation of points with better Peak-to-Average Power Ratio is obtained from the uniform amplitude phase shift keying constellation since the points of the constellation are eventually located on concentric circles and their respective powers take a limited number of values.

According to a particular feature, if, in the process of separating the constellation points, at least one constellation point of the uniform amplitude phase shift keying constellation is comprised in two circle sectors, the method comprises a further step of allocating the at least one constellation point to one of the clusters of constellation points taking into account that each cluster of constellation points has the same number of constellation points.

Thus, a constellation of points can be obtained even if at least one constellation point of the uniform amplitude phase shift keying constellation is comprised in two circle sectors, i.e., on a straight line separating two neighbour circle sectors.

According to a particular feature, the method comprises further step of selecting one constellation of points among plural constellations of points.

Thus, the parameters of the constellation can be adapted to the transmission conditions.

The present invention concerns also a method for receiving data as defined in independent claim 7 and further detailed in the dependent claims referring back to this claim.

The present invention concerns also a device for receiving data as defined in independent claim 11 and further detailed in the dependent claims referring back to this claim.

According to still another aspect, the present invention concerns computer programs which can be directly loadable into a programmable device, comprising instructions or portions of code for implementing the steps of the methods according to the invention, when said computer programs are executed on a programmable device.

The present invention is defined by the appended claims and limited only by their scope. Any embodiment and/or aspect (of the invention and/or disclosure) referred to in this description and not fully falling within the scope of said appended claims is to be interpreted as an example useful for understanding the present invention.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :

Fig. 1 represents a wireless link in which the present invention is implemented;
Fig. 2 is a diagram representing the architecture of a source in which the present invention is implemented;
Fig. 3a discloses a block diagram of components of the wireless interface of the source according to a first mode of realization of the present invention;
Fig. 3b discloses a block diagram of components of the wireless interface of the source according to a second mode of realization of the present invention;

Fig. 4 is a diagram representing the architecture of a receiver in which the present invention is implemented;

Fig. 5 discloses a block diagram of components of the wireless interface of the receiver according to the present invention;

Fig. 6 discloses an example of an algorithm executed by a source in order to determine a constellation according to the present invention;

Fig. 7 discloses an example of an algorithm executed by a source in order to map information bits onto a constellation according to the present invention;

Fig. 8 discloses an example of an algorithm executed by a receiver in order to demodulate symbols of a constellation according to the present invention;

Fig. 9 discloses an example of a separation of a 64 Amplitude Phase Shift Keying constellation into four circle sectors;

Fig. 10 discloses a first example of a constellation of points separated in four regions according to the present invention;

Fig. 11 discloses a second example of a constellation of points separated in four regions according to the present invention;

Fig. 12 discloses an example of a separation of a 64 Amplitude Phase Shift Keying constellation into eight circle sectors;

Fig. 13 discloses a first example of a constellation of points separated in eight regions according to the present invention;

Fig. 14 discloses a second example of a constellation of points separated in eight regions according to the present invention.

Fig. 15 discloses the first example of a constellation of points separated in eight regions according to the present invention, on which re-scaling is performed and on which virtual points are inserted.

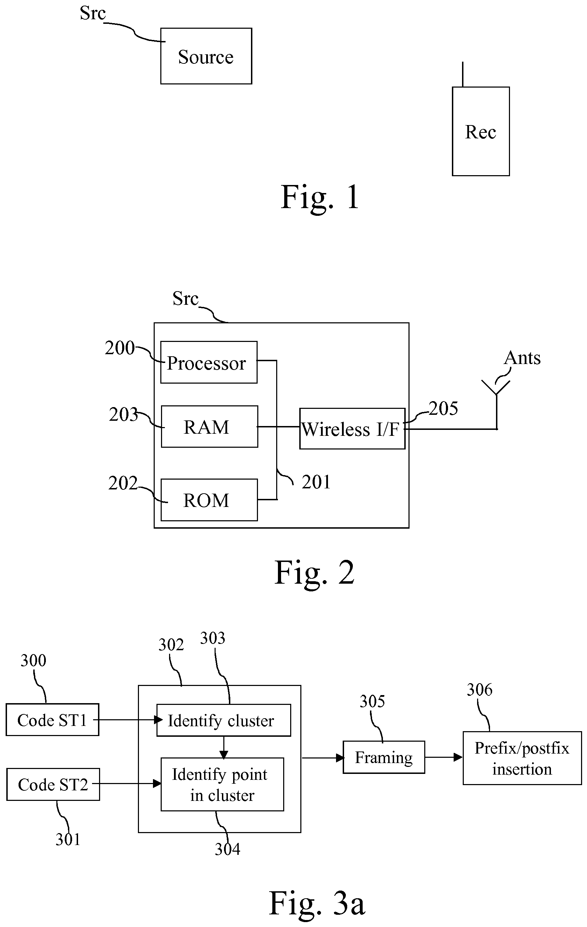

**Fig. 1** represents a wireless link in which the present invention is implemented.

The present invention will be disclosed in an example in which the signals transferred by a source Src are transferred to receivers Rec.

For example, the source Src may be included in a satellite or in a terrestrial transmitter and broadcasts signals to receivers.

Only one receiver Rec is shown in the Fig. 1 for the sake of simplicity, but signals are broadcasted to a more important number of receivers Rec.

The receiver Rec may be a mobile terminal to which data like video signals are broadcasted.

According to the invention, the source Src:

-   identifies, from a first number of bits of the first stream, a cluster of constellation points among clusters of constellation points, each cluster of constellation points having the same number of points and being comprised in a respective region, each region being delimited by a pair of straight lines forming an angle of $2\pi/C$ where C is the number of clusters and an arc of circle of one circle, said circle having a same centre as the constellation of points and at least one constellation point being on the circle, the intersection of the pair of straight lines being at a first non null distance from the centre of the circle, said distance being the same amongst all intersections, the radius of the circle being dependent of said distance, each bisector of the angle of $2\pi/C$ formed by each pair of straight lines passing through the centre of the circle,
-   identifies, from a second number of bits of the second stream, one constellation point out of the constellation points comprised in the identified cluster, the constellation points in each cluster being set on plural rings, the ring radii being dependent of the said distance,

-   maps the bits used for identifying to the identified constellation point of the identified cluster of constellation points, in order to form a symbol to be transmitted,
-   transmits the symbol to the at least one receiver.

According to the invention, the receiver Rec:

-   receives at least one symbol,
-   determines information related to the first stream from the received symbol and from a constellation of points, the constellation being divided into clusters of constellation points, each cluster of constellation points having the same number of points and being comprised in a respective region, each region being delimited by a pair of straight lines forming an angle of $2\pi/C$ where C is the number of clusters and an arc of circle of one circle, said circle having a same centre as the constellation of points and at least one constellation point being on the circle, the intersection of the pair of straight lines being at a first non null distance from the centre of the circle, said distance being the same amongst all intersections, the radius of the circle being dependent of said distance, each bisector of the angle of $2\pi/C$ formed by each pair of straight lines passing through the centre of the circle,

- decodes data of the first stream from the information related to the first stream. The constellations used for transmission and reception are identical.

**Fig. 2** is a diagram representing the architecture of a source in which the present invention is implemented.

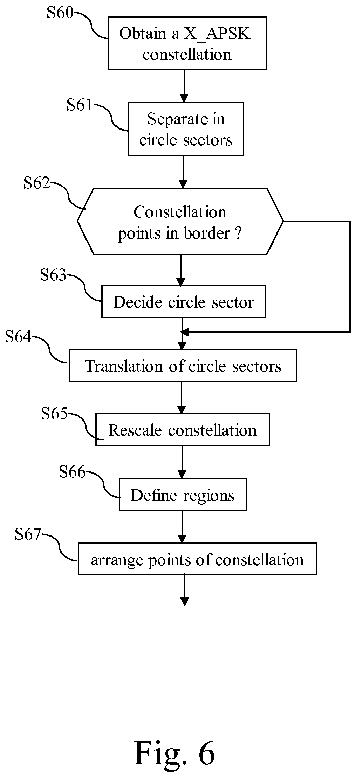

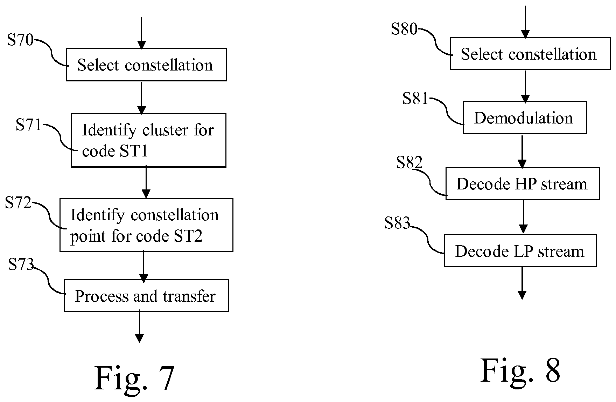

The source Src has, for example, an architecture based on components connected together by a bus 201 and a processor 200 controlled by the program as disclosed in Figs. 6 and 7.

It has to be noted here that the source Src may have an architecture based on dedicated integrated circuits.

The bus 201 links the processor 200 to a read only memory ROM 202, a random access memory RAM 203 and a wireless interface 205.

The memory 203 contains registers intended to receive variables and the instructions of the programs related to the algorithms as disclosed in Figs. 6 and 7 and may comprise plural constellations of points according to the present invention.

The processor 200 controls the operation of the wireless interface 205.

The read only memory 202 contains instructions of the program related to the algorithms as disclosed in Figs. 6 and 7, which are transferred, when the source Src is powered on, to the random access memory 203, and may comprise plural constellations of points according to the present invention.

Any and all steps of the algorithms described hereafter with regard to Figs. 6 and 7 may be implemented in software by execution of a set of instructions or program by a programmable computing machine, such as a PC (Personal Computer), a DSP (Digital Signal Processor) or a microcontroller; or else implemented in hardware by a machine or a dedicated component, such as an FPGA (Field-Programmable Gate Array) or an ASIC (Application-Specific Integrated Circuit).

In other words, the source Src includes circuitry, or a device including circuitry, causing the source Src to perform the steps of the algorithms described hereafter with regard to Figs. 6 and 7.

Such a device including circuitry causing the source Src to perform the steps of the algorithms described hereafter with regard to Figs. 6 and 7 may be an external device connectable to the source Src.

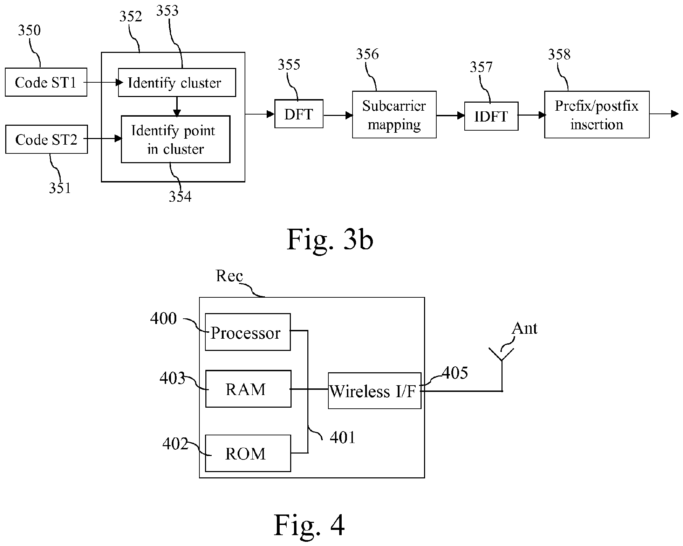

The wireless interface 205 comprises components as disclosed in Fig. 3a or 3b.

**Fig. 3a** discloses a block diagram of components of the wireless interface of the source according to a first mode of realization of the present invention.

In the first mode of realization, a narrowband single carrier transmission scheme is used.

Data to be transmitted are divided into a first HP and a second LP streams. The HP stream may comprise the essential information and the LP stream may comprise detailed information.

HP and LP bit streams can be independent, or some relationship can exist between the two bit streams. For example LP stream may encode differential information with respect to the information carried in the HP stream. Bit scrambling can optionally occur before the coding modules 300 and 301.

The ST1 code module 300 encodes the HP stream and the ST2 code module 301 encodes the LP stream. The ST1 code module 300 and the ST2 code module 301 may optionally comprise interleaving modules. The two code modules 300 and 301 may employ the same or different codes and/or coding rates. Coding with rate 1 may be equivalent to uncoded transmission; in this case the coding module may be omitted.

The encoded HP and LP streams are provided to a constellation mapping module 302. The constellation mapping module 302 may according to a particular mode of realization of the present invention select one constellation of points among a plurality of constellation of points according to the present invention.

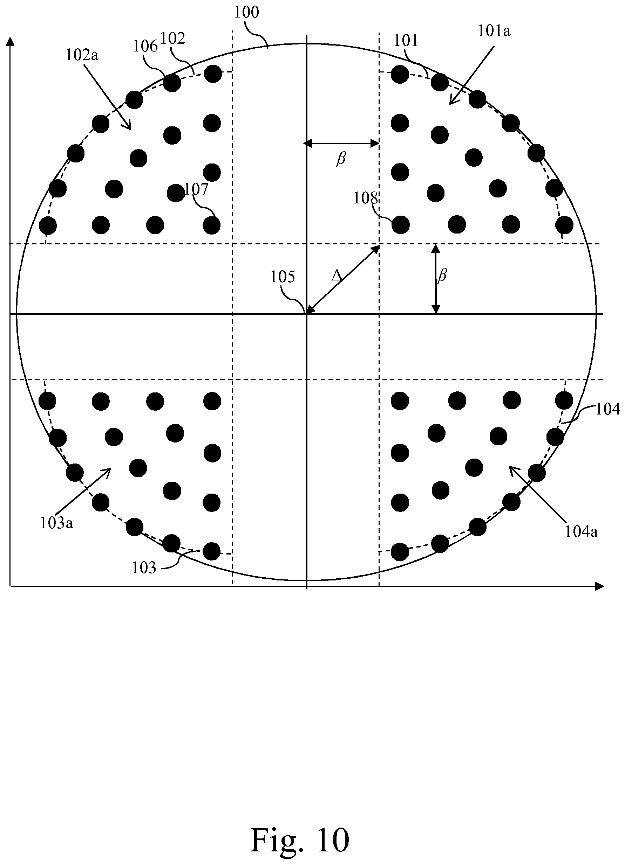

The constellation mapping module 302 comprises a cluster identification module 303 which identifies, from bits of the encoded HP stream, clusters of constellation points of a constellation of points according to the present invention. Examples of clusters of constellation points will be given in reference to Figs. 10, 11, 13 and 14. The cluster identification module 303 partitions encoded HP streams into groups of $n_1$ bits and identifies, for each group of $n_1$ bits, a cluster of constellation points among clusters of constellation points of the constellation of points.

Each cluster of constellation points has the same number of points and is comprised in a respective region. Each region is delimited by a pair of straight lines forming an angle of $2\pi/C$ where C is the number of clusters and an arc of circle of one circle. The circle has a same centre as the constellation of points and at least one constellation point is on the circle. The intersection of the pair of straight lines is at a first non null distance from the centre of the circle, said distance is the same amongst all intersections. The radius of the circle is dependent of said distance and each bisector of the angle of $2\pi/C$ formed by each pair of straight lines passes through the centre of the circle.

The constellation mapping module 302 comprises a constellation point identification module 304 which identifies, from bits of the encoded LP stream, constellation points. The constellation point identification module 304 partitions encoded LP streams into groups of $n_2$ bits and identifies, for each group of $n_2$ bits, a constellation point of the cluster of constellation points identified by the mapping module 303.

The mapping module 302 maps the group of n'=$n_1$+$n_2$ bits composed respectively of $n_1$ bits of the HP stream and $n_2$ bits of the LP stream to the identified constellation point of the identified cluster of constellation points, in order to form a symbol to be transmitted.

The result of the mapping of the HP and LP streams is provided to a frame builder 305.

The frame builder 305 inserts the constellation symbols into transmission frames corresponding to the chosen transmission format and inserts all other necessary symbols such as, for example, pilots for channel estimation.

The output of the frame builder 305 may be provided to an optional prefix/postfix insertion module 306 before transmission.

The output of the frame builder or the output of the prefix/postfix insertion module 306 is then ready for transmission.

**Fig. 3b** discloses a block diagram of components of the wireless interface of the source according to a second mode of realization of the present invention.

In the second mode of realization, a multi-carrier transmission scheme such as SC-FDMA (Single-carrier Frequency Division Multiple Access), OFDMA (Orthogonal Frequency-Division Multiple Access), MC-CDMA (Multi Carrier-Code Division Multiple access) or other precoded OFDMA may be used.

Data to be transmitted are divided into a first HP and a second LP streams. The HP stream may comprise the essential information and the LP stream may comprise detailed information.

HP and LP bit streams can be independent, or some relationship can exist between the two bit streams. For example LP stream may encode differential information with respect to the information carried in the HP stream. Bit scrambling can optionally occur before the coding modules 350 and 351.

The ST1 code module 350 encodes the HP stream and the ST2 code module 351 encodes the LP stream. The ST1 code module 350 and the ST2 code module 351 may optionally comprise interleaving modules. The two code modules 350 and 351 may employ the same or different codes and/or coding rates. Coding with rate 1 may be equivalent to uncoded transmission; in this case the coding module may be omitted.

The encoded HP and LP streams are provided to a constellation mapping module 352.

The constellation mapping module 352 may according to a particular mode of realization of the present invention select one constellation of points among a plurality of constellation of points according to the present invention. The constellation mapping module 352 comprises a cluster identification module 353 which identifies, from bits of the encoded HP stream, clusters of constellation points. Examples of clusters of constellation points will be given in reference to Figs. 10, 11, 13 and 14. The cluster identification module 353 partitions encoded HP streams into groups of $n_1$ bits and identifies, for each group of $n_1$ bits, a cluster of constellation points among clusters of constellation points of the amplitude phase shift keying modulation.

Each cluster of constellation points has the same number of points and is comprised in a respective region. Each region is delimited by a pair of straight lines forming an angle of $2\pi/C$ where C is the number of clusters and an arc of circle of one circle. The circle has a same centre as the constellation of points and at least one constellation point is on the circle. The intersection of the pair of straight lines is at a first non null distance from the centre of the circle, said distance is the same amongst all intersections. The radius of the circle is dependent of said distance and each bisector of the angle of $2\pi/C$ formed by each pair of straight lines passes through the centre of the circle.

The constellation mapping module 352 comprises a constellation point identification module 354 which identifies, from bits of the encoded LP stream, constellation points. The constellation point identification module 354 partitions encoded LP streams into groups of $n_2$ bits and identifies, for each group of $n_2$ bits, a constellation point of the cluster of constellation points identified by the mapping module 353.

The mapping module 352 maps the group of n'=$n_1$+$n_2$ bits composed respectively of $n_1$ bits of the HP stream and $n_2$ bits of the LP stream to the identified constellation point of the identified cluster of constellation points, in order to form a symbol to be transmitted.

If the transmission scheme is SC-FDMA, the result of the mapping of the HP and LP streams is provided to a DFT module 355 (Discrete Fourier Transform) which spreads in the frequency domain the result of the mapping of the HP and LP streams. The DFT module 355 may be replaced by a Fast Fourier Transform module.

The DFT module 355 may be absent, case in which we obtain OFDMA transmission.

The DFT module 355 may be replaced by a Walsh Hadamard module to obtain MC-CDMA transmission.

The DFT module 355 may be replaced by other type of precoding module to obtain precoded OFDMA transmission.

The precoded data symbols are mapped on subcarriers by a subcarrier mapping module 356.

The output of the subcarrier module 356 is provided to an IDFT module 357 (Inverse Discrete Fourier Transform) of size superior or equal to the size of the DFT module 355.

In a variant, the IDFT module 357 may be replaced by an Inverse Fast Fourier Transform module or other processing module.

The output of the IDFT module 357 may be provided to an optional prefix/postfix insertion module 358 before transmission.

The output of the IDFT module 357 or the output of the prefix/postfix insertion module 306 is then ready for a transmission like for example a broadcast.

**Fig. 4** is a diagram representing the architecture of a receiver in which the present invention is implemented.

The receiver Rec has, for example, an architecture based on components connected together by a bus 401 and a processor 400 controlled by the program as disclosed in Fig. 8.

It has to be noted here that the receiver Rec may have an architecture based on dedicated integrated circuits.

The bus 401 links the processor 400 to a read only memory ROM 402, a random access memory RAM 403 and a wireless interface 405.

The memory 403 contains registers intended to receive variables and the instructions of the program related to the algorithm as disclosed in Fig. 8 and may comprise plural constellations of points according to the present invention.

The processor 400 controls the operation of the wireless interface 405.

The read only memory 402 contains instructions of the program related to the algorithm as disclosed in Fig. 8, which are transferred, when the receiver Rec is powered on, to the random access memory 403, and may comprise plural constellations of points according to the present invention.

Any and all steps of the algorithm described hereafter with regard to Fig. 8 may be implemented in software by execution of a set of instructions or program by a programmable computing machine, such as a PC (Personal Computer), a DSP (Digital Signal Processor) or a microcontroller; or else implemented in hardware by a machine or a dedicated component, such as an FPGA (Field-Programmable Gate Array) or an ASIC (Application-Specific Integrated Circuit).

In other words, the receiver Rec includes circuitry, or a device including circuitry, causing the receiver Rec to perform the steps of the algorithm described hereafter with regard to Fig. 8.

Such a device including circuitry causing the receiver Rec to perform the steps of the algorithm described hereafter with regard to Fig. 8 may be an external device connectable to the source Src.

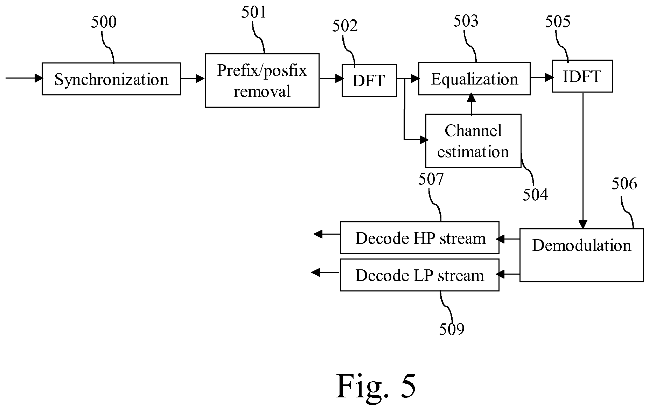

The wireless interface 405 comprises components as disclosed in Figs. 5.

**Fig. 5** discloses a block diagram of components of the wireless interface of the receiver according to the present invention.

The wireless interface 405 comprises a synchronization module 500 which synchronizes the received signals.

The wireless interface 405 may comprise an optional prefix/postfix removal module 501.

The output of the prefix/postfix removal module 501 is provided to a DFT module 502.

The output of the DFT module 502 is provided to an equalization module 503 and to a channel estimation module 504. The channel estimation module 504 is providing information to the equalization module 503.

The output of the equalization module 503 is provided to an IDFT module 505. When the receiver Rec decodes a single carrier signal like the one generated in Fig. 3a, modules 502 and 505 are either both present (equalization in the frequency domain) or both absent (equalization in the time domain).

When the receiver decodes a multi-carrier signal like the one generated in Fig. 3b, IDFT module 505 may either be present (SC-FDMA), or absent (OFDMA) or be replaced by another type of processing which reverses the effect of the precoding module 355. For example, for MC-CDMA transmission, IDFT module 505 is replaced with an inverse Walsh Hadamard module.

The output of the IDFT module 505 is provided to a demodulation module 506.

If there is no IDFT module or de-spreading module, the output of the equalization module 503 is directly provided to the demodulation module 506.

The demodulation module 506 may, according to a particular mode of realization of the present invention, select constellation of points among a plurality of constellations of points stored in the RAM memory 403.

The demodulation module 506 provides information related to the HP stream to a HP decoding module 507.

The demodulating module 506 determines information related to the HP stream from the received symbol and from the same constellation of points used by the source Src for transmitting symbols.

Each cluster of constellation points has the same number of points and is comprised in a respective region. Each region is delimited by a pair of straight lines forming an angle of $2\pi/C$ where C is the number of clusters and an arc of circle of one circle. The circle has a same centre as the constellation of points and at least one constellation point is on the circle. The intersection of the pair of straight lines is at a first non null distance from the centre of the circle, said distance is the same amongst all intersections. The radius of the circle is dependent of said distance and each bisector of the angle of $2\pi/C$ formed by each pair of straight lines passes through the centre of the circle.

The decoding module 507 decodes data of the HP stream from the information related to the HP stream.

Information related to the HP stream may be soft bits.

The demodulating module 506 provides information related to the LP stream to a LP decoding module 509.

The demodulating module 506 determines information related to the LP stream from the received symbol and from the same constellation of points used by the source Src for transmitting symbols.

The LP decoding module 509 decodes data of the LP stream from the information related to the LP stream.

Information related to the LP stream may be soft bits.

At the receiver side, a possibility is to simultaneously decode both the HP and LP streams. Simultaneous decoding of both streams is possible, especially when the information on the cluster brings about little improvement on the decoding of the LP stream. Other decoder configurations can be used like feedback from the HP decoder to the LP decoder, or iterative decoding.

In a variant, when the message transmitted by the source is simultaneously transmitted to several receivers, i.e. broadcasted, the targeted receivers Rec may have different capabilities. For example, some less capable receivers may only be equipped to decode the HP stream, even in good propagation conditions. In this case, for the less capable receivers, 509 may be absent.

**Fig. 6** discloses an example of an algorithm executed by a source in order to determine a constellation according to the present invention;

More precisely, the present algorithm is executed by the processor 200 of the source Src.

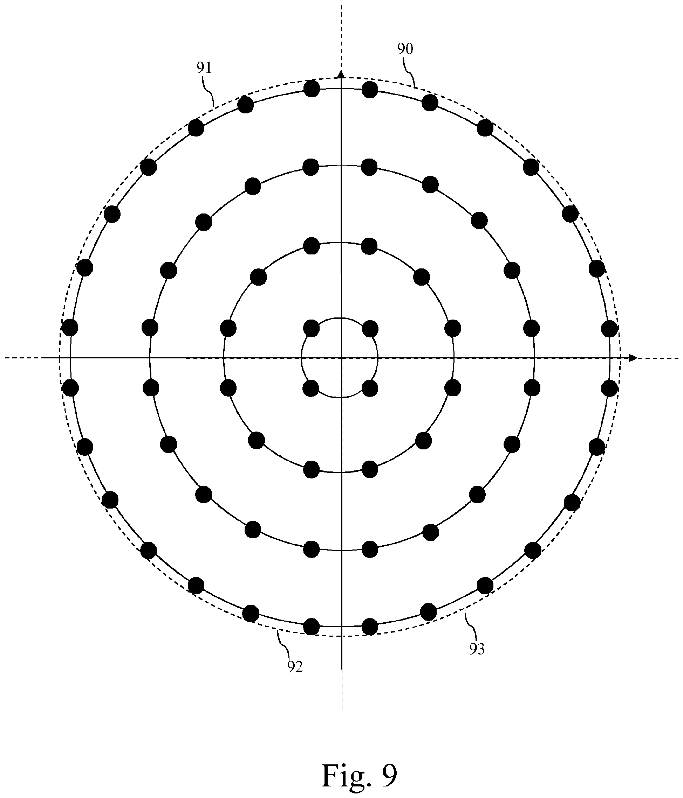

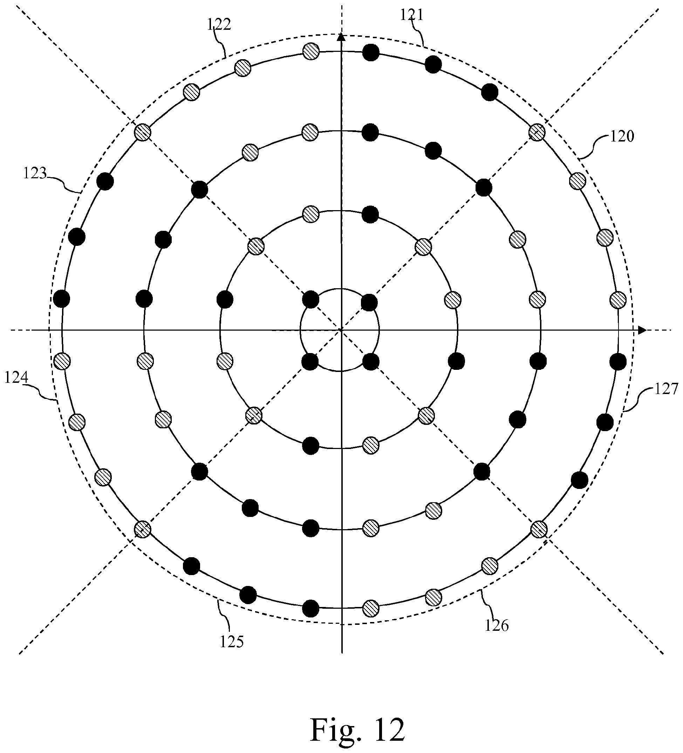

At step S60, the processor 200 obtains a X-APSK constellation (Amplitude Phase Shift Keying) with M rings, each k-th ring containing $N_k$ constellation points, k=1...M. For example, if X=64, we have a 64-APSK constellation. An example of 64 APSK constellation is given in Fig. 9 or 12.

The particular examples in Figs 9 and 12 correspond to uniform APSK constellations.

A uniform amplitude phase shift keying modulation contains constellation points which are placed on concentric rings of different radii, the constellation points onto each ring being evenly spaced.

A non uniform amplitude phase shift keying modulation contains constellation points which are placed on concentric rings of different radii, the constellation points onto each ring being unevenly spaced.

In a variant, at step S60, the processor 200 may obtain a non-uniform X-APSK constellation.

At next step S61, the processor 200 separates the 64-APSK constellation into angular regions or in other words circle sectors. For example, the processor 200 separates the 64-APSK constellation into C=4 circle sectors as shown in Fig. 9, or separates the 64-APSK constellation into C=8 circle sectors as shown in Fig. 12, C being the number of clusters of constellation points.

**Fig. 9** discloses an example of a separation of a 64 Amplitude Phase Shift Keying constellation into four circle sectors.

The four circle sectors are noted 90, 91, 92 and 93 in Fig. 9.

The 64 APSK constellation given in the example of Fig. 9 is a 4-12-20-28 APSK constellation with M=4 rings. $N_1$=4 is the number of constellation points of the first ring, i.e. the ring having the smallest radius $R_1$, $N_2$=12 is the number of constellation points of the second ring of radius $R_2$, $N_3$=20 is the number of constellation points of the third ring of radius $R_3$ and $N_4$=28 is the number of constellation points of the fourth ring of radius $R_4$, i.e. the ring having the largest radius. Different numbers of constellation points per ring and/or different numbers of rings can be considered also.

Each circle sector corresponds to a cluster, each cluster should thus contain sixteen constellation points. This is equivalent to constellation splitting in C=4 clusters of 16 points each, and consequently to allocating $n_1$=2 bits to the HP and $n_2$=4 bits to the LP stream.

The constellation point on ring *k* having index *n* (index counting starts at 0, counting counterclockwise) is

$$y(k,n) = R_k \exp\left( j\left( \frac{2\pi n}{N_k} + \phi_k \right) \right)$$

Where $\phi_k$ is the phase of *y*(*k*,0). In the particular case of Fig. 9 where the constellation is symmetric with respect to the real axis and thus

$$\phi_k = \frac{\pi}{N_k}$$

$$y(k,n) = R_k \exp\left( \frac{2\pi}{N_k}\left( n + \frac{1}{2} \right) \right) = R_k \exp\left( \frac{\pi(2n+1)}{N_k} \right)$$

In the example of Fig. 9, each constellation point *y*(*k,n*) is attributed to a cluster *c, c*=0...*C*-1. Cluster number *c* depends on *(k, n)* for each constellation point. For each couple (*k,n*) there is an unique associated c. For each cluster c, there is a group of associated couples *(k, n)* corresponding to the group of constellation points belonging to the cluster.

**Fig. 12** discloses an example of a separation of a 64 Amplitude Phase Shift Keying constellation into eight circle sectors.

The eight circle sectors are noted 120, to 127 in Fig. 12.

The 64 APSK constellation given in the example of Fig. 12 is a 4-12-20-28 APSK constellation with *M*=4 rings.

Each circle sector corresponds to a cluster, each cluster should thus contain eight constellation points. This is equivalent to constellation splitting in *C*=8 clusters of 8 points each, and consequently to allocating $n_1$=3 bits to the HP and $n_2$=3 bits to the LP stream.

The constellation point on ring *k* having index *n* (index counting starts at 0, counting counterclockwise) is

$$y(k,n) = R_k \exp\left( j\left( \frac{2\pi n}{N_k} + \phi_k \right) \right)$$

Where $\phi_k$ is the phase of *y(k,0)*. In the particular case of Fig. 12 where the constellation is symmetric with respect to the real axis and thus $\phi_k = \dfrac{\pi}{N_k}$

$$y(k,n) = R_k \exp\left( \frac{2\pi}{N_k}\left( n + \frac{1}{2} \right) \right) = R_k \exp\left( \frac{\pi(2n+1)}{N_k} \right)$$

At next step S62, the processor 200 checks if there is at least one constellation point which falls onto a circle sector border.

For a separation as shown in Fig. 9 no constellation point falls onto a circle sector border.

It has to be noted here that in the example given in reference to Fig. 12, some constellation points fall onto circle sector borders.

If there is at least one constellation point which falls onto a circle sector border, the processor 200 moves to step S63. Otherwise, the processor 200 moves to step S64.

At step S63, the processor 200 decides to which cluster constellation points which fall onto a circle sector border belong to, taking into account that all clusters should have the same number of points, 2"2 .

Points comprised between the circle sectors 120 and 121 fall onto a circle sector border, points comprised between the circle sectors 122 and 123 fall onto a circle sector border, points comprised between the circle sectors 124 and 125 fall onto a circle sector border and points comprised between the circle sectors 126 and 127 fall onto a circle sector border.

The hashed points on the circle sector border between 120 and 121 belong to the circle sector 120. The black points in the circle sector border between 120 and 121 belong to the circle sector 121.

The hashed points on the circle sector border between 122 and 123 belong to the circle sector 122. The black points in the circle sector border between 122 and 123 belong to the circle sector 123.

The hashed points on the circle sector border between 124 and 125 belong to the circle sector 124. The black points in the circle sector border between 124 and 125 belong to the circle sector 125.

The hashed points on the circle sector border between 126 and 127 belong to the circle sector 126. The black points in the circle sector border between 126 and 127 belong to the circle sector 127.

Each constellation point *y(k,n)* has now been attributed to a cluster *c, c*=0...*C*-1. Cluster number c depends on (*k, n*) for each constellation point. For each couple (*k, n*) there is an unique associated *c.* For each cluster *c,* there is a group of associated couples (*k, n*) corresponding to the group of constellation points belonging to the cluster. Each circle sector corresponds to a cluster, each cluster contains eight constellation points. The constellation is split in *C*=8 clusters of 8 points each.

Other types of decisions can be made, as long as all the groups of constellation points have the same number of constellation points.

Once the step S63 is executed, the processor 200 moves to step S64.

At step S64, the processor 200 selects and imposes a translation of each cluster of constellation points along the circle sector borders ensuring that the constellation points of the cluster are distant from a distance larger than $\beta$ from the circle sector borders.

In other words, each cluster of constellation points is translated from the center and along the bisector of its respective circle sector by a distance Δ

$$\Delta = \frac{\beta}{\sin\dfrac{\pi}{C}}$$

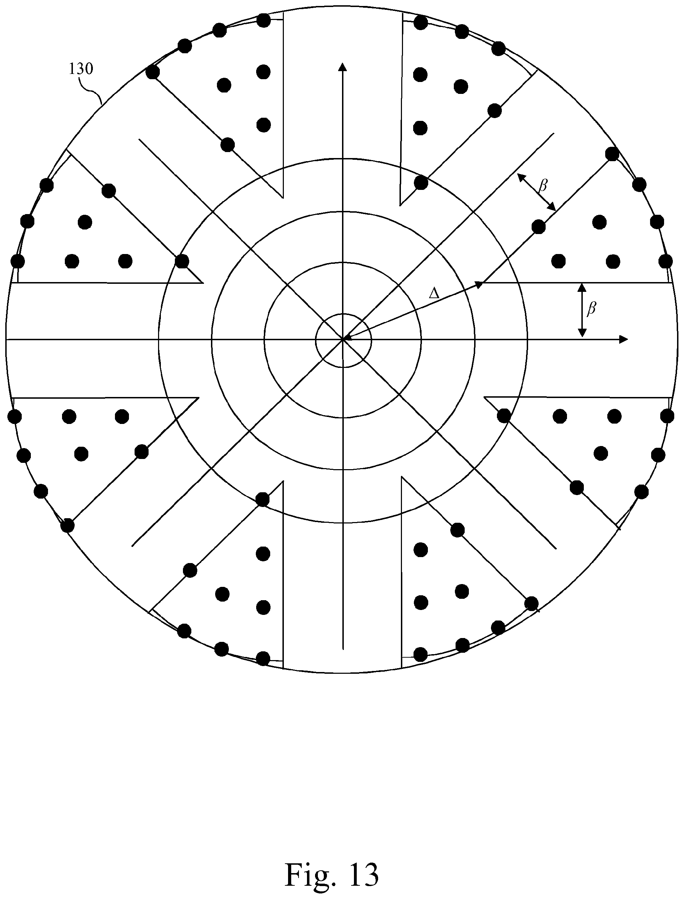

Such translation is shown in Figs. 10 and 13.

A translation is applied on each constellation point of each cluster. Each constellation point $y(k,n)$ belonging to cluster c is transformed into a constellation point $y_c'(k,n)$ belonging to cluster $c$

$$y_c'(k,n) = \Delta \exp\left(j\left(\frac{2\pi}{C}\left(c+\frac{1}{2}\right)+\phi\right)\right) + y(k,n) =$$

$$= \frac{\beta}{\sin\frac{\pi}{C}}\exp\left(j\left(\frac{2\pi}{C}\left(c+\frac{1}{2}\right)+\phi\right)\right) + R_k \exp\left(j\left(\frac{2\pi n}{N_k}+\phi_k\right)\right)'$$

where $\phi$ is the angle between the real axis and the border between the first and the last cluster, measured before cluster displacement. In the present example, $\phi = 0$.

**Fig. 13** discloses a first example of a constellation of points separated in eight regions according to the present invention.

In the example in Fig. 13, $\beta$=0.3976. Since $C$=8 it follows that $\Delta$=1.039.

It has to be noted here that values given in the example of Fig. 13 are examples. Other values can be taken without departing from the scope of the present invention.

Each constellation point $y(k,n)$ belonging to cluster $c$ is transformed into a constellation point $y_c'(k,n)$ belonging to cluster $c$.

As it can be seen on Fig. 13, $y_c'(k,n)$ does no longer correspond to an APSK constellation.

The circle noted 130 represents the circle the arcs of circle of which delimit regions comprising respectively a cluster of constellation points. The radius of the circle 130 may be different between constellations of points of the present invention and depends on the distance $\Delta$.

The intersections of the pairs of straight lines delimiting the regions of the constellation of points are all at the non null distance $\Delta$ from the centre of the circle 130.

Other circles shown in Fig. 13 represent the rings of the original constellation shown in Fig. 12.

**Fig. 10** discloses a first example of a constellation of points separated in four regions according to the present invention.

In the example in Fig. 10, $\beta$=0.4976. Since $C$=4, it follows that $\Delta$=0.7037.

It has to be noted here that values given in the example of Fig. 10 are examples. Other values can be taken without departing from the scope of the present invention.

Each constellation point $y(k,n)$ belonging to cluster c is transformed into a constellation point $y_c'(k,n)$ belonging to cluster c as given by:

$$y_c'(k,n) = y(k,n) + \beta\left(\text{sign}\left(\text{Re}\left(y(k,n)\right)\right) + j\cdot\text{sign}\left(\text{Im}\left(y(k,n)\right)\right)\right)$$

As it can be seen on Fig. 10, $y_c'(k,n)$ does no longer correspond to an APSK constellation.

The circle noted 100 represents the circle the arcs of circle of which delimit regions comprising respectively a cluster of constellation points. The radius of the circle 100 may be different between constellations of points of the present invention and depends on the distance $\Delta$.

The intersections of the pairs of straight lines delimiting the regions of the constellation of points are all at the non null distance $\Delta$ from the centre of the circle 130.

The arcs of circles noted 101, 102, 103 and 104 are arcs of circles of the ring having the largest radius and on which constellation points are set in Fig. 9, after translation of distance $\Delta$ in the direction of the bisector of the circle sector comprising the cluster while keeping the constellation points contained in respective clusters of constellation points in the respective circle sectors.

At step S65, the processor 200 re-scales the constellation to unitary mean power. Alternatively, the processor 200 re-scales the constellation to a non-unitary mean power.

For a re-scaling to unitary mean power, rescaling factor $\gamma$ may be computed as

$$\gamma = \sqrt{\frac{1}{X}\sum_{k=1}^{M}\sum_{n=0}^{N_k-1}\left|y_c'(n,k)\right|^2}$$

The points of the rescaled constellation may be computed as:

$$y_c''(k,n) = \frac{y_c'(k,n)}{\gamma}$$

In the example given in Fig. 12, some simplification of above mentioned formulas may be performed.
In the present case, $\phi = 0$, then

$$y_c'(k,n) = y(k,n) + \beta\Big(\mathrm{sign}\big(\mathrm{Re}\big(y(k,n)\big)\big) + j\cdot\mathrm{sign}\big(\mathrm{Im}\big(y(k,n)\big)\big)\Big),$$

The rescaling factor $\gamma$ can be computed

$$\gamma = \mathrm{sqrt}\left(\frac{1}{X}\left(\sum_{k=1}^{M}\sum_{n=0}^{N_k-1}\left(\big|y(k,n)\big|^2 + 2\beta\,\mathrm{Re}\Big(y(k,n)\big(\mathrm{sign}\big(\mathrm{Re}\big(y(k,n)\big)\big) - j\cdot\mathrm{sign}\big(\mathrm{Im}\big(y(k,n)\big)\big)\big)\Big)\right)+\ldots\right.\right.$$

$$\left.\left.+\beta^2\left(\big|\mathrm{sign}\big(\mathrm{Re}\big(y(k,n)\big)\big)\big|^2 + \big|\mathrm{sign}\big(\mathrm{Im}\big(y(k,n)\big)\big)\big|^2\right)^2\right)\right)\right) =$$

$$= \sqrt{\frac{1}{X}\left(\underbrace{\sum_{k=1}^{M}\sum_{n=0}^{N_k-1}\big|y(k,n)\big|^2}_{=X} + 2\beta\sum_{k=1}^{M}\sum_{n=0}^{N_k-1}\Big(\big|\mathrm{Re}\big(y(k,n)\big)\big| + \big|\mathrm{Im}\big(y(k,n)\big)\big|\Big)+2\beta^2\right)}$$

Thus,

$$\gamma = \sqrt{1 + \frac{2\beta}{X}\sum_{k=1}^{M}\sum_{n=0}^{N_k-1}\Big(\big|\mathrm{Re}\big(y(k,n)\big)\big| + \big|\mathrm{Im}\big(y(k,n)\big)\big|\Big) + \frac{2\beta^2}{X}}$$

The processor 200 computes the points of the rescaled constellation as:

$$y_c''(k,n) = \frac{y_c'(k,n)}{\gamma}$$

After re-scaling, at step S65, each cluster of constellation points is comprised in a respective region, each region being delimited by a pair of straight lines forming an angle of $2\pi/C$ where C is the number of clusters and an arc of circle of one circle. The circle has the same centre as the constellation of points and at least one constellation point is on the circle. The intersection of the pair of straight lines is at a non null distance $\delta = \Delta/\gamma$ from the centre of the circle, this distance being the same amongst all intersections.
The present algorithm may be interrupted once step S65 is performed or the processor 200 may, according to a particular mode of realization of the present invention, move from step S65 to S66.
At step S66, the processor 200 re-arranges the constellation points in order to transform this constellation into a X-APSK constellation with $M$ rings of radii $R'_k$, in order to reduce the PAPR.
According to a first example of realization of the re-arrangement of the constellation points, let us denote by $y_c'''(k,n)$ the constellation points of the rearranged new X-APSK situated on ring $k$ ($k=1...M$) having index $n$ within their ring as defined above, $n=0...N_k-1$ and belonging to cluster $c$ ($c=0...C$).
For each ring $k$, $k=1...M$, the following relation must stand in order to keep the same mean power per ring:

$$\sum_{c=0}^{C}\left(\sum_{\substack{\text{all } n \text{ such that} \\ y_c''(k,n) \text{ is in } c}} |y_c'''(k,n)|^2\right) = \sum_{c=0}^{C}\left(\sum_{\substack{\text{all } n \text{ such that} \\ y_c''(k,n) \text{ is in } c}} |y_c''(k,n)|^2\right)$$

Which re-writes as:

$$\sum_{n=0}^{N_k-1} |y_c'''(k,n)|^2 = \sum_{c=0}^{C}\left(\sum_{\substack{\text{all } n \text{ such that} \\ y_c''(k,n) \text{ is in } c}} |y_c''(k,n)|^2\right)$$

And thus

$$N_k R_k'^2 = \sum_{c=0}^{C}\left(\sum_{\substack{\text{all } n \text{ such that} \\ y_c''(k,n) \text{ is in } c}} |y_c''(k,n)|^2\right)$$

New radii $R'_k$ can thus be computed as

$$R_k' = \sqrt{\frac{\sum_{c=0}^{C}\left(\sum_{\substack{\text{all } n \text{ such that} \\ y_c''(k,n) \text{ is in } c}} |y_c''(k,n)|^2\right)}{N_k}}$$

And then,

$$y_c'''(k,n) = R'_k \frac{y_c''(k,n)}{|y_c''(k,n)|}$$

According to a second example of realization of the re-arrangement of the constellation points, in the case when constellation points, before circle sector displacement, are symmetrical with respect to the circle sectors borders, instead of computing $y_c'''(k,n)$ as in above, circle sector reshaping can be employed.

The processor 200 computes circles of radius $R'_k$ using the same formula as in the first example of realization of the re-arrangement of the constellation points, If, before circle sector displacement, there were no constellation points on circle sector borders, the points $y_c''(k,n)$ are moved onto new corresponding rings k of radius $R'_k$ in order to obtain the new X-APSK. For that, the following operation is performed for each ring k and each cluster of constellation points c. If at most one constellation point to be moved onto ring k exists in the cluster of constellation points, if the at most one constellation point is placed onto the bisector of the circle sector comprising the cluster of constellation points, the processor 200 keeps the constellation point's phase and modifies the constellation point's amplitude to $R'_k$. Otherwise, the processor 200 translates the at most one constellation point to the new circle of radius $R'_k$ by keeping the same distance between the constellation point and the closest straight line delimiting the region comprising the cluster of constellation points i.e. the phase of the constellation point is modified. If at least two constellation points to be moved onto the ring k exist in the cluster of constellation points, then the processor 200 moves the two constellations points of the cluster which are the closest to each straight line of the pair of straight lines delimiting the region of the cluster to the new circle of radius $R'_k$ by keeping the same distance to the closest straight line delimiting the region i.e. the phase of the constellation point is modified. Then, the processor 200 evenly rearranges onto the ring k the remaining points to be moved onto in between these two points so as to have the same absolute phase difference between two neighbouring constellation points.

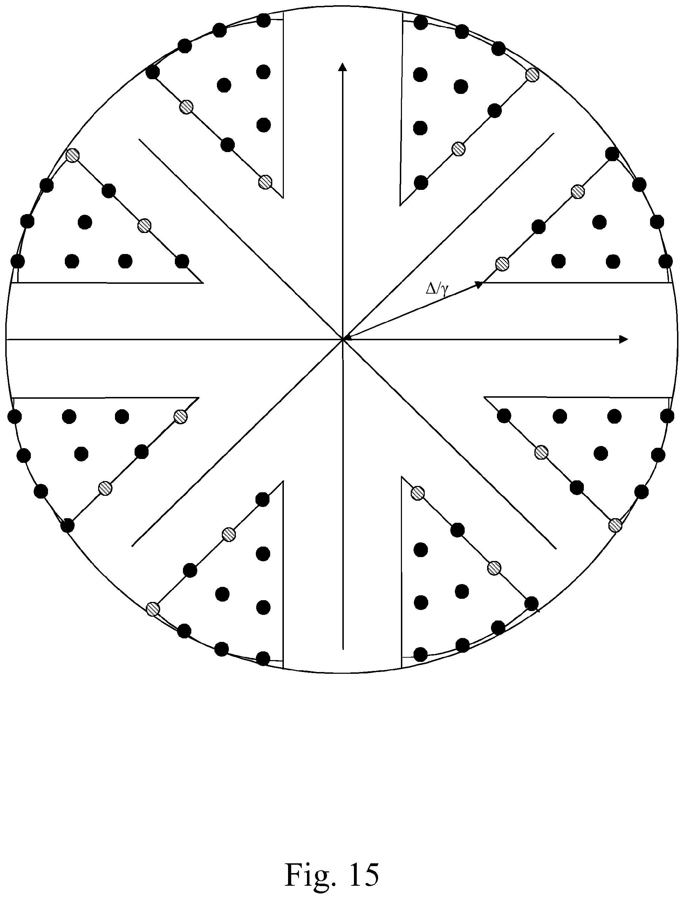

If, before circle sector displacement, there are X' constellation points on circle sector borders, the processor 200 adds X' virtual constellation points onto the circle sector borders in the positions where they would have been if different cluster choices were made at step S61. For example, for the constellation as shown in Fig. 13, the processor 200 adds X'=16 virtual points as shown in Fig. 15.

**Fig. 15** discloses the first example of a constellation of points separated in eight regions according to the present invention, on which re-scaling is performed and on which virtual points are inserted.

The hashed points in Fig. 15 are the virtual points.

These virtual points are used for defining the modified phase of constellation points, i.e., they are considered as constellation points by the processor 200 for phase computation. Virtual points are removed from the clusters after re-arrangement of the constellation points.

According to a third example of realization of the re-arrangement of the constellation points, the processor 200 translates the constellation point to the new circle of radius $R'_k$ by keeping the phase difference between the straight line going through the intersection of the pair of straight lines delimiting the region and the constellation point after re-arrangement of the constellation points the same as before rearrangement of the constellation points.

In a variant, other means of computing new radii $R'_k$ exist. For example, the processor 200 may compute for each k a $R'_{k\_max} = \max_n \left| y''_c(k, n) \right|$ and then compute the new radii by applying re-scaling on the obtained constellation of points in order to obtain the same mean power after re-arrangement of the constellation points as before re-arrangement of the constellation points. Thus, new radii can be computed as

$$R'_k = \frac{R'_{k\_max}}{\sqrt{\dfrac{\sum_{l=1}^{M} R'^2_{l\_max} N_l}{X}}} \ .$$

With this radii choice, we can re-arrange the constellation points in order to obtain a new X-APSK constellation in any of the manners described in the first, second or third examples of realization described here-above, in order to obtain variants of these three examples of realization.

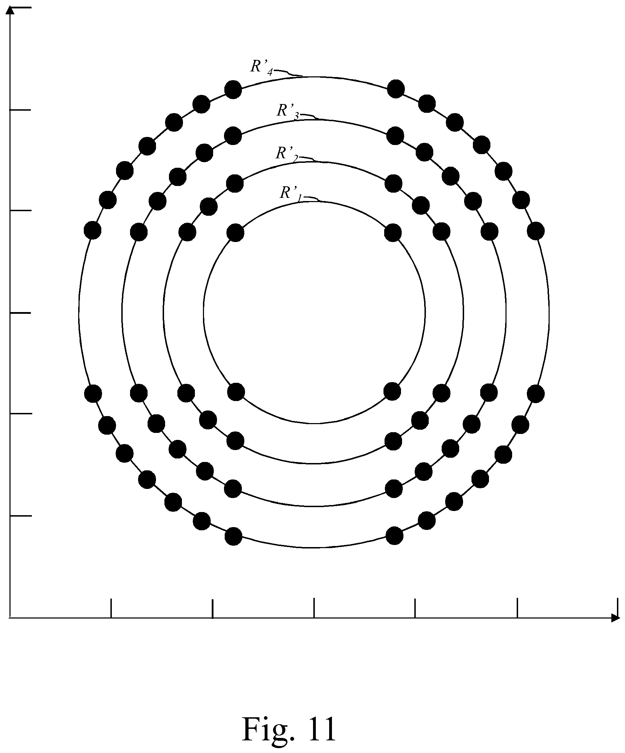

**Fig. 11** discloses a second example of a constellation of points separated in four regions according to the present invention.

In the example of Fig. 11, we obtain R'$_1$=0.5494, R'$_2$=0.7423, R'$_3$=0.9522 and R'$_4$=1.1657 using the first example of realization of the re-arrangement of the constellation points. According to the invention, values of radii given in Fig. 11 may vary at most of +/- 5%.

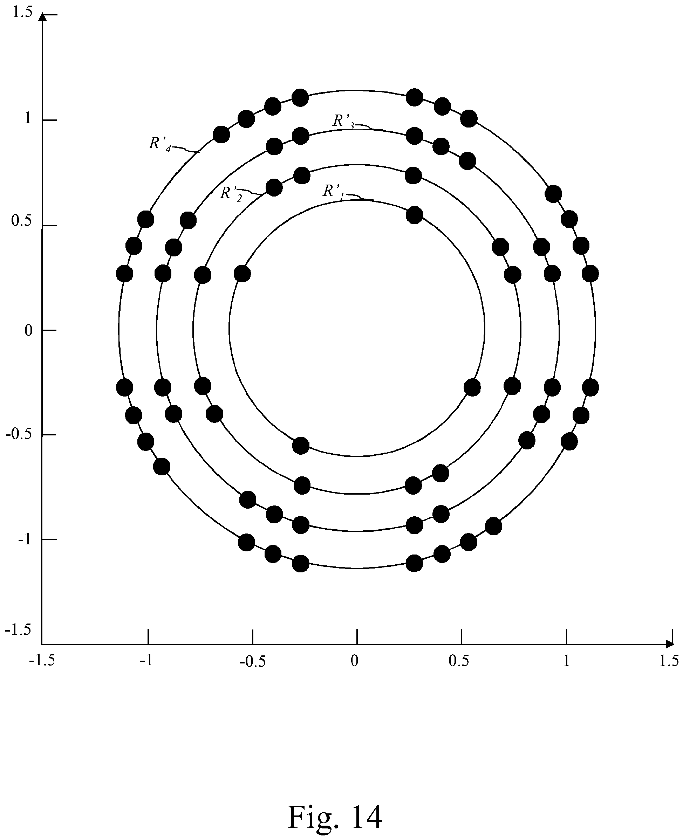

**Fig. 14.** discloses a second example of a constellation of points separated in eight regions according to the present invention.

In the example of Fig. 14, we obtain R'$_1$=0.6135, R'$_2$=0.7868, R'$_3$=0.9637 and R'$_4$=1.1416 using the first example of realization of the re-arrangement of the constellation points. According to the invention, values of radii given in Fig. 14 may vary at most of +/- 5%.

**Fig. 7** discloses an example of an algorithm executed by a source in order to map information bits onto a constellation according to the present invention.

At step S70, the processor 200 selects one constellation of points among plural constellations of points which are, for example stored in the RAM memory 203. For example, each constellation of points corresponds to a given distance $\Delta/\gamma$ and/or to a given number of clusters of points.

The distance $\Delta/\gamma$ and/or the given number of clusters of points may be adapted in function of transmission conditions like for example weather conditions in the transmission regions.

It has to be noted here that in a variant, the constellation of points is predetermined. In such variant, the selected constellation of points is the predetermined constellation of points and in this case step S70 may be missing.

It has to be noted here that the step S70 is not executed each time a symbol needs to be transferred. The step S70 may be executed only on periodical basis, for example each day or may be executed when reception conditions vary.

At next step S71, the processor 200 identifies, from bits of the encoded HP stream, clusters of constellation points. The processor 200 partitions encoded HP streams into groups of $n_1$ bits and identifies, for each group of $n_1$ bits, a cluster of constellation points among clusters of constellation points of the selected constellation of points.

Each cluster of constellation points has the same number of points and is comprised in a respective region. Each region is delimited by a pair of straight lines forming an angle of $2\pi/C$ where C is the number of clusters and an arc of circle of one circle. The circle has a same centre as the constellation of points and at least one constellation point is on the circle. The intersection of the pair of straight lines is at a first non null distance from the centre of the circle, said distance is the same amongst all intersections. The radius of the circle is dependent of said distance and each bisector of the angle of $2\pi/C$ formed by each pair of straight lines passes through the centre of the circle.

At step S72, the processor 200 identifies, from bits of the encoded LP stream, constellation points. The processor 200 partitions encoded LP streams into groups of $n_2$ bits and identifies, for each group of $n_2$ bits, a constellation point of the cluster of constellation points identified at step S71.

At step S73, the processor 200 maps each group of $n'=n_1+n_2$ bits composed respectively of $n_1$ bits of the HP stream and $n_2$ bits of the LP stream to the identified constellation point of the identified cluster of constellation points, in order to form a symbol to be transmitted.

For example, for a 64 APSK constellation partitioned into C=4 clusters of 16 points each, $n_1$ is equal to two and $n_2$ is equal to four and groups of $n'=n_1+n_2=6$ bits are mapped onto each constellation point.

Let us assume a particular example of bit to constellation mapping, suitable for the particular case of a constellation separated in C=4 clusters. For example, let us assume that in the process of bit to constellation mapping the first two bits correspond to the HP stream and the last four bits correspond to the LP stream. This is a particular example, in the general case the bits of the LP stream do not necessarily appear in the first $n_1$ positions.

Let us also assume that all groups of $n'=6$ bits having the first $n_1=2$ bits with values 00 map onto symbols in the region noted 101a in Fig 10, that all groups of $n'=6$ bits having the first $n_1=2$ bits with values 10 map onto symbols in the region noted 102a in Fig 10, that all groups of $n'=6$ bits having the first $n_1=2$ bits with values 11 map onto symbols in the region noted 103a in Fig 10, and that all groups of $n'=6$ bits having the first $n_1=2$ bits with values 01 map onto symbols in the region noted 104a in Fig 10. More particularly, let us assume that the group of bits 101110 is mapped onto the constellation point noted 106 in Fig. 10, the group of bits 101000 is mapped onto the constellation point noted 107 in Fig. 10 and the group of bits 001000 is mapped onto the constellation point noted 108 in Fig. 10. With this particular mapping, for the HP stream, a binary value of 00 identifies the cluster of constellation points comprised in the region noted 101a in Fig. 10, a binary value of 10 identifies the cluster of constellation points comprised in the region noted 102a in Fig. 10, a binary value of 11 identifies the cluster of constellation points comprised in the region noted 103a in Fig. 10 and a binary value of 01 identifies the cluster of constellation points comprised in the region noted 104a in Fig. 10.

The processor 200 processes symbols as disclosed in Fig. 3a or as in Fig. 3b.

**Fig. 8** discloses an example of an algorithm executed by a receiver in order to demodulate symbols of a constellation according to the present invention.

At step S80, the processor 400 selects one constellation of points among plural constellations of points which are, for example stored in the RAM memory 403. For example each constellation of points corresponds to a given distance $\Delta/\gamma$ and/or to a given number of clusters of points.

The distance $\Delta/\gamma$ and/or the given number of clusters of points may be adapted in function of transmission conditions like for example weather conditions in the transmission regions.

It has to be noted here that in a variant, the constellation of points is predetermined. In such variant, the selected constellation of points is the predetermined constellation of points and thus step S80 may be missing.

For example, the receiver Rec receives from the source Src, information indicating which constellation of point is used by the source Src for transferring data. The receiver Rec selects the same constellation of points as the one used by the source Src.

It has to be noted here that the step S80 is not executed each time a symbol needs to be transferred. The step S80 may be executed only on periodical basis, for example each day or when the source Src signals that it changed the used constellation, or may be executed when reception conditions vary.

At next step S81, the processor 400 receives at least one symbol from the source Src and demodulates the at least one received symbol and determines information related to the HP stream and information related to the LP stream. The processor 400 determines data information related to the HP stream from the received symbol and from the same constellation of points used by the source Src for transmitting symbols.

Each cluster of constellation points has the same number of points and is comprised in a respective region. Each region is delimited by a pair of straight lines forming an angle of $2\pi/C$ where C is the number of clusters and an arc of circle of one circle. The circle has a same centre as the constellation of points and at least one constellation point is on the circle. The intersection of the pair of straight lines is at a first non null distance from the centre of the circle, said distance is the same amongst all intersections. The radius of the circle is dependent of said distance and each bisector of the angle formed by each pair of straight lines passing through the centre of the circle.

At next step S82, the processor 400 decodes data related to the HP stream.

At next step S83, the processor 400 decodes data related to the LP stream.

It has to be noted here that the step S83 may not be executed, for example when the receiver Rec has limited processing capabilities.

At the receiver side, a possibility is to simultaneously decode both the HP and LP streams. Simultaneous decoding of both streams is possible, especially when the information on the cluster brings about little improvement on the decoding of the LP stream. Other decoder configurations can be used like feedback from the HP decoder to the LP decoder, or iterative decoding.

Naturally, many modifications can be made to the embodiments of the invention described above without departing from the scope of the present invention which is defined by the appended claims and limited solely by their scope.

**Claims**

1. Method for transferring data to at least one receiver, said data being decomposed in a first and a second streams, said method comprising the steps of:

   - identifying (S71), from a first number of bits of the first stream, a cluster of constellation points among clusters of constellation points comprised in a constellation of points, each cluster of constellation points having the same number of points and being comprised in a respective region, each region being delimited by a pair of straight lines forming an angle of $2\pi/C$ where C is the number of clusters and an arc of circle of one circle, said circle having a same centre as the constellation of points and at least one constellation point being on the circle, the intersection of the pair of straight lines being at a first non null distance from the centre of the circle, said distance being the same amongst all intersections, the radius of the circle being dependent of said distance, each bisector of the angle of $2\pi/C$ formed by each pair of straight lines passing through the centre of the circle,
   - identifying (S72), from a second number of bits of the second stream, one constellation point out of the constellation points comprised in the identified cluster, the constellation points in each cluster being set on plural rings, the ring radii being dependent of the said distance,
   - mapping (S73) the first and second numbers of bits used for identifying in the previous steps to the identified constellation point of the identified cluster of constellation points, in order to form a symbol to be transmitted,
   - transmitting (S73) the symbol to the at least one receiver;

   said method being **characterized in that**:
   the location of constellation points of said constellation of points is obtained by:

   - separating the constellation points of an uniform amplitude phase shift keying constellation into said clusters of constellation points, each cluster of constellation points containing the same number of constellation points, each cluster of constellation points being comprised in a circle sector among a plurality of circle sectors, each of said circle sectors corresponding to said respective region, said circle sectors being contiguous, having the same central point and being each delimited by the same angle that is equal to said angle of $2\pi/C$ formed by said straight lines, wherein said circle sectors are separated from respective neighbour circle sectors by said straight lines,
   - applying, for each constellation point of each cluster, a translation of a second distance value in the direction of the bisector of the circle sector comprising the cluster while keeping the constellation points contained in respective clusters of constellation points in the respective circle sectors,
   - re-scaling the constellation of points on which the translations are applied, the second distance value being after the re-scaling equal to the first distance value.

2. Method according to claim 1, **characterized in that** the constellation points in each cluster, prior to the steps of applying and re-scaling, are set on plural rings having the same centre for a same cluster and **in that**, for each cluster, said centre is the intersection of the pair of straight lines delimiting the region in which the cluster is comprised.

3. Method according to claim 1, **characterized in that** the constellation points in each cluster, prior to the steps of applying and re-scaling, are set on plural concentric rings having the same centre for all clusters, said centre being the same as the centre of the one circle.

4. Method according to claim 3, **characterized in that** the method comprises further steps of:

   - determining new rings, the ring radii depending on said first distance, said rings being concentric and having the same center as the constellation,
   - displacing the points of constellation onto the new rings, each point being displaced onto the closest new ring.

5. Method according to claim any of the claims 1 to 4, **characterized in that** if, in the process of separating the constellation points, at least one constellation point of the uniform amplitude phase shift keying constellation is comprised in two circle sectors, the method comprises a further step of allocating the at least one constellation point to one of the clusters of constellation points taking into account that each cluster of constellation points has the same number of constellation points.

6. Method according to any of the claims 1 to 5, **characterized in that** the method comprises further step of selecting one constellation of points among plural constellations of points.

7. Method for receiving data by a receiver transmitted by a source, said data being decomposed in a first and a second streams, said method comprising the steps, executed by the receiver, of:

   - receiving at least one symbol,
   - determining information related to the first stream from the received symbol and from a constellation of points, the constellation being divided into clusters of constellation points, each cluster of constellation points having the same number of points and being comprised in a respective region, each region being delimited by a pair of straight lines forming an angle of $2\pi/C$ where C is the number of clusters and an arc of circle of one circle, said circle having a same centre as the constellation of points and at least one constellation point being on the circle, the intersection of the pair of straight lines being at a first non null distance from the centre of the circle, said distance being the same amongst all intersections, the radius of the circle being dependent of said distance, each bisector of the angle of $2\pi/C$ formed by each pair of straight lines passing through the centre of the circle,
   - decoding data of the first stream from the information related to the first stream;

   said method being **characterized in that**:
   the location of constellation points of said constellation of points is obtained by:

   - separating the constellation points of an uniform amplitude phase shift keying constellation into said clusters of constellation points, each cluster of constellation points containing the same number of constellation points, each cluster of constellation points being comprised in a circle sector among a plurality of circle sectors, each of said circle sectors corresponding to said respective region, said circle sectors being contiguous, having the same central point and being each delimited by the same angle that is equal to said angle of 2n/C formed by said straight lines, wherein said circle sectors are separated from respective neighbour circle sectors by said straight lines,
   - applying, for each constellation point of each cluster, a translation of a second distance value in the direction of the bisector of the circle sector comprising the cluster while keeping the constellation points contained in respective clusters of constellation points in the respective circle sectors,
   - re-scaling the constellation of points on which the translations are applied, the second distance value being after the re-scaling equal to the first distance value.

8. Method according to claim 7, **characterized in that** the method comprises further step of :

   - determining information related to the second stream from the received symbol and from the constellation of points,
   - decoding data of the second stream from the information related to the second stream.

9. Method according to the claim 7 or 8, **characterized in that** the method comprises further step of selecting one constellation of points among plural constellations of points.

10. Device for transferring data to at least one receiver, said data being decomposed in a first and a second streams, said device comprising:

   - means for identifying, from a first number of bits of the first stream, a cluster of constellation points among clusters of constellation points comprised in a constellation of points, each cluster of constellation points having the same number of points and being comprised in a respective region, each region being delimited by a pair of straight lines forming an angle of $2\pi/C$ where C is the number of clusters and an arc of circle of one circle, said circle having a same centre as the constellation of points and at least one constellation point being on the circle, the intersection of the pair of straight lines being at a first non null distance from the centre of the circle, said distance being the same amongst all intersections, the radius of the circle being dependent of said distance, each bisector of the angle of $2\pi/C$ formed by each pair of straight lines passing through the centre of the circle,

- means for identifying, from a second number of bits of the second stream, one constellation point out of the constellation points comprised in the identified cluster, the constellation points in each cluster being set on plural rings, the ring radii being dependent of the said distance,
- means for mapping the first and second numbers of bits used for identifying to the identified constellation point of the identified cluster of constellation points, in order to form a symbol to be transmitted,
- means for transmitting the symbol to the at least one receiver;

said device being **characterized in that**:
the location of constellation points of said constellation of points is obtained by:

- separating the constellation points of an uniform amplitude phase shift keying constellation into said clusters of constellation points, each cluster of constellation points containing the same number of constellation points, each cluster of constellation points being comprised in a circle sector among a plurality of circle sectors, each of said circle sectors corresponding to said respective region, said circle sectors being contiguous, having the same central point and being each delimited by the same angle that is equal to said angle of 2n/C formed by said straight lines, wherein said circle sectors are separated from respective neighbour circle sectors by said straight lines,
- applying, for each constellation point of each cluster, a translation of a second distance value in the direction of the bisector of the circle sector comprising the cluster while keeping the constellation points contained in respective clusters of constellation points in the respective circle sectors,
- re-scaling the constellation of points on which the translations are applied, the second distance value being after the re-scaling equal to the first distance value.

11. Device for receiving data transmitted by a source, said data being decomposed in a first and a second streams, said device comprising:

- means for receiving at least one symbol,
- means for determining information related to the first stream from the received symbol and from a constellation of points, the constellation being divided into clusters of constellation points, each cluster of constellation points having the same number of points and being comprised in a respective region, each region being delimited by a pair of straight lines forming an angle of $2\pi/C$ where C is the number of clusters and an arc of circle of one circle, said circle having a same centre as the constellation of points and at least one constellation point being on the circle, the intersection of the pair of straight lines being at a first non null distance from the centre of the circle, said distance being the same amongst all intersections, the radius of the circle being dependent of said distance, each bisector of the angle of $2\pi/C$ formed by each pair of straight lines passing through the centre of the circle,
- means for decoding data of the first stream from the information related to the first stream;

said device being **characterized in that**:
the location of constellation points of said constellation of points is obtained by:

- separating the constellation points of an uniform amplitude phase shift keying constellation into said clusters of constellation points, each cluster of constellation points containing the same number of constellation points, each cluster of constellation points being comprised in a circle sector among a plurality of circle sectors, each of said circle sectors corresponding to said respective region, said circle sectors being contiguous, having the same central point and being each delimited by the same angle that is equal to said angle of 2pi/C formed by said straight lines, wherein said circle sectors are separated from respective neighbour circle sectors by said straight lines,
- applying, for each constellation point of each cluster, a translation of a second distance value in the direction of the bisector of the circle sector comprising the cluster while keeping the constellation points contained in respective clusters of constellation points in the respective circle sectors,
- re-scaling the constellation of points on which the translations are applied, the second distance value being after the re-scaling equal to the first distance value.

12. Computer program loadable into a programmable device, said computer program comprising instructions or portions of code which cause said programmable device to perform the steps of the method according to claims 1 to 6, when said computer program is executed on said programmable device.

**13.** Computer program loadable into a programmable device, said computer program comprising instructions or portions of code which cause said programmable device the steps of the method according to claims 7 to 9, when said computer program is executed on said programmable device.

**Patentansprüche**

**1.** Verfahren zum Transferieren von Daten zu wenigstens einem Empfänger, wobei die Daten in einen ersten und einen zweiten Strom zerlegt sind, wobei das Verfahren die folgenden Schritte umfasst:

- Identifizieren (S71), aus einer ersten Anzahl von Bits des ersten Stroms, eines Clusters von Konstellationspunkten unter Clustern von Konstellationspunkten, die in einer Konstellation von Punkten umfasst sind, wobei jedes Cluster von Konstellationspunkten dieselbe Anzahl von Punkten hat und in einem jeweiligen Bereich umfasst ist, wobei jeder Bereich begrenzt ist durch ein Paar von geraden Linien, die einen Winkel von $2\pi/C$ bilden, wobei C die Anzahl von Clustern ist, und einen Kreisbogen von einem Kreis, wobei der Kreis einen selben Mittelpunkt wie die Konstellation von Punkten hat und wobei wenigstens ein Konstellationspunkt auf dem Kreis ist, wobei der Schnittpunkt des Paars von geraden Linien bei einem ersten Abstand von nicht Null vom Mittelpunkt des Kreises ist, wobei der Abstand unter allen Schnittpunkten derselbe ist, wobei der Radius des Kreises abhängig vom Abstand ist, wobei jede Halbierende des Winkels von $2\pi/C$, der durch jedes Paar von geraden Linien gebildet ist, durch den Mittelpunkt des Kreises verläuft,
- Identifizieren (S72), aus einer zweiten Anzahl von Bits des zweiten Stroms, von einem Konstellationspunkt aus den Konstellationspunkten, die im identifizierten Cluster umfasst sind, wobei die Konstellationspunkte in jedem Cluster auf mehreren Ringen platziert sind, wobei die Ringradien abhängig vom Abstand sind,
- Abbilden (S73) der ersten und der zweiten Anzahl von Bits, die zum Identifizieren in den vorherigen Schritten verwendet sind, zu dem identifizierten Konstellationspunkt der identifizierten Konstellationspunkte, um ein zu sendendes Symbol auszubilden,
- Senden (S73) des Symbols zu dem wenigstens einen Empfänger;

wobei das Verfahren **dadurch gekennzeichnet ist, dass**:
der Standort von Konstellationspunkten der Konstellation von Punkten erhalten wird durch:

- Trennen der Konstellationspunkte einer einheitlichen Amplituden-Phasenumtastungs-Konstellation in die Cluster von Konstellationspunkten, wobei jedes Cluster von Konstellationspunkten dieselbe Anzahl von Konstellationspunkten enthält, wobei jedes Cluster von Konstellationspunkten in einem Kreissektor unter einer Vielzahl von Kreissektoren umfasst ist, wobei jeder der Kreissektoren dem jeweiligen Bereich entspricht, wobei die Kreissektoren benachbart sind, denselben Mittelpunkt haben und jeweils durch denselben Winkel begrenzt sind, der gleich dem Winkel $2\pi/C$ ist, der durch die geraden Linien gebildet ist, wobei die Kreissektoren von jeweiligen Nachbar-Kreissektoren durch die geraden Linien getrennt sind,
- Anwenden, für jeden Konstellationspunkt jedes Clusters, einer Umsetzung eines Werts eines zweiten Abstands in der Richtung der Halbierenden des Kreissektors, der das Cluster umfasst, während eines Haltens der in jeweiligen Clustern von Konstellationspunkten enthaltenen Konstellationspunkte in den jeweiligen Kreissektoren,
- Neuskalieren der Konstellation von Punkten, auf welche die Umsetzungen angewendet sind, wobei der Wert des zweiten Abstands nach dem Neuskalieren gleich dem Wert des ersten Abstands ist.

**2.** Verfahren nach Anspruch 1, **dadurch gekennzeichnet, dass** die Konstellationspunkte in jedem Cluster vor den Schritten eines Anwendens und Neuskalierens auf mehreren Ringen platziert werden, die denselben Mittelpunkt für ein selbes Cluster haben, und dass, für jedes Cluster, der Mittelpunkt der Schnittpunkt des Paars von geraden Linien ist, die den Bereich begrenzen, in welchem das Cluster umfasst ist.

**3.** Verfahren nach Anspruch 1, **dadurch gekennzeichnet, dass** die Konstellationspunkte in jedem Cluster vor den Schritten eines Anwendens und Neuskalierens auf mehreren konzentrischen Ringen platziert werden, die denselben Mittelpunkt für alle Cluster haben, wobei der Mittelpunkt derselbe wie der Mittelpunkt von dem einen Kreis ist.

**4.** Verfahren nach Anspruch 3, **dadurch gekennzeichnet, dass** das Verfahren folgende weitere Schritte umfasst:

- Bestimmen neuer Ringe, wobei die Ringradien vom ersten Abstand abhängen, wobei die Ringe konzentrisch sind und denselben Mittelpunkt wie die Konstellation haben,

- Versetzen der Punkte einer Konstellation auf die neuen Ringe, wobei jeder Punkt auf den neuen Ring versetzt wird, der am nächsten ist.

5. Verfahren nach einem der Ansprüche 1 bis 4, **dadurch gekennzeichnet, dass** dann, wenn im Prozess eines Trennens der Konstellationspunkte wenigstens ein Konstellationspunkt der einheitlichen Amplituden-Phasenumtastungs-Konstellation in zwei Kreissektoren umfasst ist, das Verfahren einen weiteren Schritt eines Zuteilens des wenigstens einen Konstellationspunkts zu einem der Cluster von Konstellationspunkten unter Berücksichtigung dessen umfasst, dass jedes Cluster von Konstellationspunkten dieselbe Anzahl von Konstellationspunkten hat.

6. Verfahren nach einem der Ansprüche 1 bis 5, **dadurch gekennzeichnet, dass** das Verfahren einen weiteren Schritt eines Auswählens von einer Konstellation von Punkten unter mehreren Konstellationen von Punkten umfasst.

7. Verfahren zum Empfangen von Daten durch einen Empfänger, die durch ein Quelle gesendet sind, wobei die Daten in einen ersten und einen zweiten Strom zerlegt sind, wobei das Verfahren die folgenden durch den Empfänger ausgeführten Schritte umfasst:

- Empfangen von wenigstens einem Symbol,
- Bestimmen von Information in Bezug auf den ersten Strom aus dem empfangenen Symbol und aus einer Konstellation von Punkten, wobei die Konstellation in Cluster von Konstellationspunkten aufgeteilt ist, wobei jedes Cluster von Konstellationspunkten dieselbe Anzahl von Punkten hat und in einem jeweiligen Bereich umfasst ist, wobei jeder Bereich begrenzt ist durch ein Paar von geraden Linien, die einen Winkel von $2\pi/C$ bilden, wobei C die Anzahl von Clustern ist, und einen Kreisbogen von einem Kreis, wobei der Kreis einen selben Mittelpunkt wie die Konstellation von Punkten hat und wobei wenigstens ein Konstellationspunkt auf dem Kreis ist, wobei der Schnittpunkt des Paars von geraden Linien bei einem ersten Abstand von nicht Null vom Mittelpunkt des Kreises ist, wobei der Abstand unter allen Schnittpunkten derselbe ist, wobei der Radius des Kreises abhängig vom Abstand ist, wobei jede Halbierende des Winkels von $2\pi/C$, der durch jedes Paar von geraden Linien gebildet ist, durch den Mittelpunkt des Kreises verläuft,
- Decodieren von Daten des ersten Stroms aus der Information in Bezug auf den ersten Strom;

wobei das Verfahren **dadurch gekennzeichnet ist, dass**:
der Standort von Konstellationspunkten der Konstellation von Punkten erhalten wird durch:

- Trennen der Konstellationspunkte einer einheitlichen Amplituden-Phasenumtastungs-Konstellation in die Cluster von Konstellationspunkten, wobei jedes Cluster von Konstellationspunkten in einem Kreissektor unter einer Vielzahl von Kreissektoren umfasst ist, wobei jeder der Kreissektoren dem jeweiligen Bereich entspricht, wobei die Kreissektoren benachbart sind, denselben Mittelpunkt haben und jeweils durch denselben Winkel begrenzt sind, der gleich dem Winkel von $2\pi/C$ ist, der durch die geraden Linien gebildet ist, wobei die Kreissektoren von jeweiligen Nachbar-Kreissektoren durch die geraden Linien getrennt sind,
- Anwenden, für jeden Konstellationspunkt jedes Clusters, einer Umsetzung eines Werts eines zweiten Abstands in der Richtung der Halbierenden des Kreissektors, der das Cluster umfasst, während eines Haltens der in jeweiligen Clustern von Konstellationspunkten enthaltenen Konstellationspunkte in den jeweiligen Kreissektoren,
- Neuskalieren von Punkten, auf welche die Umsetzungen angewendet sind, wobei der Wert des zweiten Abstands nach dem Neuskalieren gleich dem Wert des ersten Abstands ist.

8. Verfahren nach Anspruch 7, **dadurch gekennzeichnet, dass** das Verfahren folgenden weiteren Schritt umfasst:

- Bestimmen von Information in Bezug auf den zweiten Strom aus dem empfangenen Symbol und aus der Konstellation von Punkten,
- Decodieren von Daten des zweiten Stroms aus der Information in Bezug auf den zweiten Strom.

9. Verfahren nach Anspruch 7 oder 8, **dadurch gekennzeichnet, dass** das Verfahren einen weiteren Schritt eines Auswählens von einer Konstellation von Punkten unter mehreren Konstellationen von Punkten umfasst.

10. Vorrichtung zum Transferieren von Daten zu wenigstens einem Empfänger, wobei die Daten in einen ersten und einen zweiten Strom zerlegt sind, wobei die Vorrichtung folgendes umfasst:

- Mittel zum Identifizieren, aus einer ersten Anzahl von Bits des ersten Stroms, eines Clusters von Konstellationspunkten unter Clustern von Konstellationspunkten, die in einer Konstellation von Punkten umfasst sind, wobei jedes Cluster von Konstellationspunkten dieselbe Anzahl von Punkten hat und in einem jeweiligen Bereich umfasst ist, wobei jeder Bereich begrenzt ist durch ein Paar von geraden Linien, die einen Winkel von $2\pi/C$ bilden, wobei C die Anzahl von Clustern ist, und einen Kreisbogen von einem Kreis, wobei der Kreis einen selben Mittelpunkt wie die Konstellation von Punkten hat und wobei wenigstens ein Konstellationspunkt auf dem Kreis ist, wobei der Schnittpunkt des Paars von geraden Linien bei einem ersten Abstand von nicht Null vom Mittelpunkt des Kreises ist, wobei der Abstand unter allen Schnittpunkten derselbe ist, wobei der Radius des Kreises abhängig vom Abstand ist, wobei jede Halbierende des Winkels von $2\pi/C$, der durch jedes Paar von geraden Linien gebildet ist, durch den Mittelpunkt des Kreises verläuft,

- Mittel zum Identifizieren, aus einer zweiten Anzahl von Bits des zweiten Stroms, von einem Konstellationspunkt aus den Konstellationspunkten, die im identifizierten Cluster umfasst sind, wobei die Konstellationspunkte in jedem Cluster auf mehreren Ringen platziert sind, wobei die Ringradien abhängig vom Abstand sind,

- Mittel zum Abbilden der ersten und der zweiten Anzahl von Bits, die zum Identifizieren in den vorherigen Schritten verwendet sind, zu dem identifizierten Konstellationspunkt der identifizierten Konstellationspunkte, um ein zu sendendes Symbol auszubilden,

- Mittel zum Senden des Symbols zu dem wenigstens einen Empfänger;

wobei die Vorrichtung **dadurch gekennzeichnet ist, dass**:
der Standort von Konstellationspunkten der Konstellation von Punkten erhalten wird durch:

- Trennen der Konstellationspunkte einer einheitlichen Amplituden-Phasenumtastungs-Konstellation in die Cluster von Konstellationspunkten, wobei jedes Cluster von Konstellationspunkten dieselbe Anzahl von Konstellationspunkten enthält, wobei jedes Cluster von Konstellationspunkten in einem Kreissektor unter einer Vielzahl von Kreissektoren umfasst ist, wobei jeder der Kreissektoren dem jeweiligen Bereich entspricht, wobei die Kreissektoren benachbart sind, denselben Mittelpunkt haben und jeweils durch denselben Winkel begrenzt sind, der gleich dem Winkel $2\pi/C$ ist, der durch die geraden Linien begrenzt ist, wobei die Kreissektoren von jeweiligen Nachbar-Kreissektoren durch die geraden Linien getrennt sind,

- Anwenden, für jeden Konstellationspunkt jedes Clusters, einer Umsetzung eines Werts eines zweiten Abstands in der Richtung der Halbierenden des Kreissektors, der das Cluster umfasst, während eines Haltens der in jeweiligen Clustern von Konstellationspunkten enthaltenen Konstellationspunkte in den jeweiligen Kreissektoren,

- Neuskalieren der Konstellation von Punkten, auf welche die Umsetzungen angewendet sind, wobei der Wert des zweiten Abstands nach dem Neuskalieren gleich dem Wert des ersten Abstands ist.

11. Vorrichtung zum Empfangen von Daten, die durch eine Quelle gesendet sind, wobei die Daten in einen ersten und einen zweiten Strom zerlegt sind, wobei die Vorrichtung folgendes umfasst:

- Mittel zum Empfangen von wenigstens einem Symbol,

- Mittel zum Bestimmen von Information in Bezug auf den ersten Strom aus dem empfangenen Symbol und aus einer Konstellation von Punkten, wobei die Konstellation in Cluster von Konstellationspunkten aufgeteilt ist, wobei jedes Cluster von Konstellationspunkten dieselbe Anzahl von Punkten hat und in einem jeweiligen Bereich umfasst ist, wobei jeder Bereich begrenzt ist durch ein Paar von geraden Linien, die einen Winkel von $2\pi/C$ bilden, wobei C die Anzahl von Clustern ist, und einen Kreisbogen von einem Kreis, wobei der Kreis einen selben Mittelpunkt wie die Konstellation von Punkten hat und wobei wenigstens ein Konstellationspunkt auf dem Kreis ist, wobei der Schnittpunkt des Paars von geraden Linien bei einem ersten Abstand von nicht Null vom Mittelpunkt des Kreises ist, wobei der Abstand unter allen Schnittpunkten derselbe ist, wobei der Radius des Kreises abhängig vom Abstand ist, wobei jede Halbierende des Winkels von $2\pi/C$, der durch jedes Paar von geraden Linien gebildet ist, durch den Mittelpunkt des Kreises verläuft,

- Mittel zum Decodieren von Daten des ersten Stroms aus der Information in Bezug auf den ersten Strom;

wobei die Vorrichtung **dadurch gekennzeichnet ist, dass**:
der Standort von Konstellationspunkten der Konstellation von Punkten erhalten wird durch:

- Trennen der Konstellationspunkte einer einheitlichen Amplituden-Phasenumtastungs-Konstellation in die Cluster von Konstellationspunkten, wobei jedes Cluster von Konstellationspunkten dieselbe Anzahl von Konstellationspunkten enthält, wobei jedes Cluster von Konstellationspunkten in einem Kreissektor unter einer Vielzahl von Kreissektoren umfasst ist, wobei jeder der Kreissektoren dem jeweiligen Bereich entspricht, wobei die Kreissektoren benachbart sind, denselben Mittelpunkt haben und jeweils durch denselben Winkel begrenzt sind, der gleich dem Winkel 2π/C ist, der durch die geraden Linien begrenzt ist, wobei die Kreissektoren von jeweiligen Nachbar-Kreissektoren durch die geraden Linien getrennt sind,

- Anwenden, für jeden Konstellationspunkt jedes Clusters, einer Umsetzung eines Werts eines zweiten Abstands in der Richtung der Halbierenden des Kreissektors, der das Cluster umfasst, während eines Haltens der in jeweiligen Clustern von Konstellationspunkten enthaltenen Konstellationspunkte in den jeweiligen Kreissektoren,

- Neuskalieren der Konstellation von Punkten, auf welche die Umsetzungen angewendet sind, wobei der Wert des zweiten Abstands nach dem Neuskalieren gleich dem Wert des ersten Abstands ist.

12. Computerprogramm, das in eine programmierbare Vorrichtung ladbar ist, wobei das Computerprogramm Anweisungen oder Teilbereiche eines Codes umfasst, die veranlassen, dass die programmierbare Vorrichtung die Schritte des Verfahrens nach den Ansprüchen 1 bis 6 durchführt, wenn das Computerprogramm auf der programmierbaren Vorrichtung ausgeführt wird.

13. Computerprogramm, das in eine programmierbare Vorrichtung ladbar ist, wobei das Computerprogramm Anweisungen oder Teilbereiche eines Codes umfasst, die veranlassen, dass die programmierbare Vorrichtung die Schritte des Verfahrens nach den Ansprüchen 7 bis 9 durchführt, wenn das Computerprogramm auf der programmierbaren Vorrichtung ausgeführt wird.

**Revendications**

1. Procédé de transfert de données à au moins un récepteur, lesdites données étant décomposées en un premier et un second flux, ledit procédé comprenant les étapes consistant à :

- identifier (S71), à partir d'un premier nombre de bits du premier flux, un bloc de points de constellation parmi des blocs de points de constellation compris dans une constellation de points, chaque bloc de points de constellation ayant le même nombre de points et étant compris dans une région respective, chaque région étant délimitée par une paire de droites formant un angle de 2π/C où C est le nombre de blocs et un arc de cercle d'un cercle, ledit cercle ayant le même centre que la constellation de points et au moins un point de constellation étant sur le cercle, l'intersection de la paire de droites étant à une première distance non nulle du centre du cercle, ladite distance étant la même parmi toutes les intersections, le rayon du cercle étant dépendant de ladite distance, chaque bissectrice de l'angle de $2\pi/C$ formé par chaque paire de droites passant par le centre du cercle,

- identifier (S72), à partir d'un second nombre de bits du second flux, un point de constellation en dehors des points de constellation compris dans le bloc identifié, les points de constellation de chaque bloc étant définis sur plusieurs anneaux, les rayons des anneaux étant dépendants du ladite distance,

- mapper (S73) les premier et second nombres de bits utilisés pour identifier dans les étapes précédentes le point de constellation identifié du bloc de points de constellation identifié, afin de former un symbole à transmettre,

- transmettre (S73) le symbole à l'au moins un récepteur; ledit procédé étant **caractérisé en ce que** :

l'emplacement des points de constellation de ladite constellation de points est obtenu par :

- séparer les points de constellation d'une constellation de modulation de déphasage à amplitude uniforme dans lesdits blocs de points de constellation, chaque bloc de points de constellation contenant le même nombre de points de constellation, chaque bloc de points de constellation étant compris dans un secteur de cercle parmi une pluralité de secteurs de cercle, chacun desdits secteurs de cercle correspondant à ladite région respective, lesdits secteurs de cercle étant contigus, ayant le même point central et étant délimités chacun par le même angle qui est égal audit angle de 2π/C formé par lesdites lignes droites dans laquelle lesdits secteurs de cercle sont séparés des secteurs de cercle voisins respectifs par lesdites lignes droites,

- appliquer, pour chaque point de constellation de chaque bloc, une translation d'une seconde valeur de distance dans la direction de la bissectrice du secteur de cercle constituant le bloc tout en conservant les points de constellation contenus dans des blocs respectifs de points de constellation dans les secteurs de cercle respectifs,

- redimensionner la constellation de points sur lesquels les translations sont appliquées, la deuxième valeur de distance étant après le redimensionnement égale à la première valeur de distance.

2. Procédé selon la revendication 1, **caractérisé en ce que** les points de constellation dans chaque bloc, avant l'étape d'application et de redimensionnement, sont définis sur plusieurs anneaux ayant le même centre pour un même bloc et **en ce que**, pour chaque bloc, ledit centre est l'intersection de la paire de droites délimitant la région dans laquelle le bloc est constitué.

3. Procédé selon la revendication 1, **caractérisé en ce que** les points de constellation dans chaque bloc, avant l'étape d'application et de redimensionnement, sont fixés sur plusieurs anneaux concentriques ayant le même centre pour tous les blocs, ledit centre étant le même centre du cercle.

4. Procédé selon la revendication 3, **caractérisé en ce que** le procédé comprend les étapes supplémentaires consistant à :

   - déterminer de nouveaux anneaux, le rayon des anneaux dépendant de ladite première distance, lesdits anneaux étant concentriques et ayant le même centre que la constellation,
   - déplacer les points de la constellation sur les nouveaux anneaux, chaque point étant déplacé sur le nouvel anneau le plus proche.

5. Procédé selon l'une quelconque des revendications 1 à 4, **caractérisé en ce que** si, lors du processus de séparation des points de constellation, au moins un point de constellation de la constellation de déphasage à amplitude uniforme est compris dans deux secteurs de cercle, le procédé comprend une étape supplémentaire consistant à affecter au moins un point de constellation à l'un des blocs de points de constellation, en tenant compte du fait que chaque bloc de points de constellation a le même nombre de points de constellation.

6. Procédé selon l'une quelconque des revendications 1 à 5, **caractérisé en ce que** le procédé comprend une étape supplémentaire de sélection d'une constellation de points parmi plusieurs constellations de points.

7. Procédé de réception de données par un récepteur transmis par une source, lesdites données étant décomposées en un premier et un second flux, ledit procédé comprenant les étapes, exécutées par le récepteur de :

   - recevoir au moins un symbole,
   - déterminer des informations relatives au premier flux à partir du symbole reçu et d'une constellation de points, la constellation étant divisée en blocs de points de constellation, chaque bloc de points de constellation ayant le même nombre de points et étant compris dans une région respective, chaque région étant délimitée par une paire de droites formant un angle de $2\pi / C$, C étant le nombre de blocs et un arc de cercle d'un cercle, ledit cercle ayant le même centre que la constellation de points et au moins un point de constellation étant sur le cercle, l'intersection de la paire de droites étant à une première distance non nulle du centre du cercle, cette distance étant la même parmi toutes les intersections, le rayon du cercle étant dépendant de cette distance, chaque bissectrice de l'angle de $2\pi/C$ formé par chaque paire de droites passant par le centre du cercle,
   - décodage de données du premier flux à partir des informations relatives au premier flux, ledit procédé étant **caractérisé en ce que** :

   l'emplacement des points de constellation de ladite constellation de point est obtenu par :

      - séparer les points de constellation d'une constellation de modulation de déphasage à amplitude uniforme dans lesdits blocs de points de constellation, chaque bloc de points de constellation contenant le même nombre de points de constellation, chaque bloc de points de constellation étant compris dans un secteur de cercle parmi une pluralité de secteurs de cercle, chacun desdits secteurs de cercle étant contigus, ayant le même point central et étant délimités chacun par le même angle égal audit angle de $2\pi/C$ formé par lesdites lignes droites, lesdits secteurs de cercle étant séparés des secteurs de cercle voisins par lignes droites,
      - appliquer, pour chaque point de constellation de chaque bloc, une translation d'une seconde valeur de distance dans la direction de la bissectrice du secteur de cercle constituant le bloc tout en conservant les points de constellation contenus dans des blocs respectifs de points de constellation dans les secteurs de cercle respectifs,
      - redimensionner la constellation de points sur lesquels les translations sont appliquées, la deuxième valeur de distance étant après la redimensionnement égale à la première valeur de distance.

8. Procédé selon la revendication 7, **caractérisé en ce que** le procédé comprend en outre l'étape consistant à :

- déterminer des informations relatives au second flux à partir du symbole reçu et de la constellation de points,
- décoder les données du second flux à partir des informations relatives au second flux.

**9.** Procédé selon la revendication 7 ou 8, **caractérisé en ce que** le procédé comprend une étape supplémentaire de sélection d'une constellation de points parmi plusieurs constellations de points.

**10.** Dispositif de transfert de données à au moins un récepteur, lesdites données étant décomposées en un premier et un second flux, ledit dispositif comprenant :

- des moyens pour identifier, parmi un premier nombre de bits du premier flux, un bloc de points de constellation parmi des blocs de points de constellation compris dans une constellation de points, chaque bloc de points de constellation ayant le même nombre de points et étant compris dans un région, chaque région étant délimitée par une paire de droites formant un angle de 2π/C où C est le nombre de blocs et un arc de cercle d'un cercle, ledit cercle ayant le même centre que la constellation de points et au moins un point de la constellation étant sur le cercle, l'intersection de la paire de droites étant à une première distance non nulle du centre du cercle, ladite distance étant la même parmi toutes les intersections, le rayon du cercle étant dépendant de ladite distance, bissectrice de l'angle de 2π/C formé par chaque paire de droites passant par le centre du cercle,
- des moyens pour identifier, à partir d'un second nombre de bits du second flux, un point de constellation en dehors des points de constellation compris dans le bloc identifié, les points de constellation de chaque bloc étant placés sur plusieurs anneaux, les rayons des anneaux étant dépendants de ladite distance,
- des moyens pour mapper les premier et second nombres de bits utilisés pour identifier le point de constellation identifié du bloc de points de constellation identifié, afin de former un symbole à transmettre,
- des moyens pour transmettre le symbole à au moins un récepteur, ledit dispositif étant **caractérisé en ce que** :

l'emplacement des points de constellation de ladite constellation de points est obtenu par :

- séparer les points de constellation d'une constellation de modulation de déphasage à amplitude uniforme dans lesdits blocs de points de constellation, chaque bloc de points de constellation contenant le même nombre de points de constellation, chaque bloc de points de constellation étant compris dans un secteur de cercle parmi une pluralité de secteurs de cercle, chacun desdits secteurs de cercle correspondant à ladite région respective, lesdits secteurs de cercle étant contigus, ayant le même point central et étant délimités chacun par le même angle qui est égal audit angle de 2π / C formé par lesdites lignes droites dans laquelle lesdits secteurs de cercle sont séparés des secteurs de cercle voisins respectifs par lesdites lignes droites,
- appliquer, pour chaque point de constellation de chaque bloc, une translation d'une seconde valeur de distance dans la direction de la bissectrice du secteur de cercle constituant le bloc tout en conservant les points de constellation contenus dans des blocs respectifs de points de constellation dans les secteurs de cercle respectifs,
- redimensionner la constellation de points sur lesquels les translations sont appliquées, la deuxième valeur de distance étant après le redimensionnement égale à la première valeur de distance.

**11.** Dispositif de réception de données transmises par une source, lesdites données étant décomposées en un premier et un second flux, ledit dispositif comprenant :

- des moyens pour recevoir au moins un symbole,
- des moyens pour déterminer des informations relatives au premier flux à partir du symbole reçu et d'une constellation de points, la constellation de points étant divisée en blocs de points de constellation, chaque bloc de points de constellation ayant le même nombre de points et étant compris dans une région respective, chaque région étant délimitée par une paire de droites formant un angle de 2π / C, C étant le nombre de blocs et un arc de cercle d'un cercle, ledit cercle ayant le même centre que la constellation de points et au moins un point de constellation étant sur le cercle, l'intersection de la paire de droites étant à une première distance non nulle du centre du cercle, cette distance étant la même parmi toutes les intersections, le rayon du cercle étant dépendant de cette distance, chaque bissectrice de l'angle de 2π / C formé par chaque paire de droites passant par le centre du cercle,

- des moyens pour décoder les données du premier flux à partir des informations liées au premier flux ;

ledit dispositif étant **caractérisé en ce que**

l'emplacement des points de constellation de ladite constellation de point est obtenu par :

- séparer les points de constellation d'une constellation de modulation de déphasage à amplitude uniforme dans lesdits blocs de points de constellation, chaque bloc de points de constellation contenant le même nombre de points de constellation, chaque bloc de points de constellation étant compris dans un secteur de cercle parmi une pluralité de secteurs de cercle, chacun desdits secteurs de cercle étant contigus, ayant le même point central et étant délimités chacun par le même angle égal audit angle de $2\pi / C$ formé par lesdites lignes droites, lesdits secteurs de cercle étant séparés des secteurs de cercle voisins par lignes droites,

- appliquer, pour chaque point de constellation de chaque bloc, une translation d'une seconde valeur de distance dans la direction de la bissectrice du secteur de cercle constituant le bloc tout en conservant les points de constellation contenus dans des blocs respectifs de points de constellation dans les secteurs de cercle respectifs,

- redimensionner la constellation de points sur lesquels les translations sont appliquées, la deuxième valeur de distance étant après le redimensionnement égale à la première valeur de distance.

12. Programme d'ordinateur chargeable dans un dispositif programmable, ledit programme d'ordinateur comprenant des instructions ou des portions de code qui amènent ledit dispositif programmable à exécuter les étapes du procédé selon les revendications 1 à 6, lorsque ledit programme d'ordinateur est exécuté sur ledit dispositif programmable.

13. Programme d'ordinateur chargeable dans un dispositif programmable, ledit programme d'ordinateur comprenant des instructions ou des portions de code qui amènent ledit dispositif programmable à exécuter les étapes du procédé selon les revendications 7 à 9, lorsque ledit programme d'ordinateur est exécuté sur ledit dispositif programmable.

Src

Source

Rec

## Fig. 1

Src

200 — Processor

203 — RAM

202 — ROM

201

Wireless I/F — 205

Ants

## Fig. 2

300

Code ST1

301

Code ST2

302 303

Identify cluster

Identify point
in cluster

304

305

Framing

306

Prefix/postfix
insertion

## Fig. 3a

Fig. 3b

Fig. 4

Fig. 5

S60 — Obtain a X_APSK constellation

S61 — Separate in circle sectors

S62 — Constellation points in border ?

S63 — Decide circle sector

S64 — Translation of circle sectors

S65 — Rescale constellation

S66 — Define regions

S67 — arrange points of constellation

Fig. 6

S70 — Select constellation

↓

S71 — Identify cluster for code ST1

↓

S72 — Identify constellation point for code ST2

↓

S73 — Process and transfer

↓

Fig. 7

S80 — Select constellation

↓

S81 — Demodulation

↓

S82 — Decode HP stream

↓

S83 — Decode LP stream

↓

Fig. 8

Fig. 9

Fig. 10

Fig. 11

Fig. 12

Fig. 13

Fig. 14

Fig. 15

**EP 2 757 753 B1**

**Patent documents cited in the description**

- US 5581578 A
- US 2008170640 A1
- US 7778335 B2